# EUROPÄISCHE PATENTSCHRIFT

(11) **EP 2 952 423 B1**
(45) Veröffentlichungstag und Bekanntmachung des Hinweises auf die Patenterteilung: **31.07.2019**
(21) Anmeldenummer: 15170666.0
(22) Anmeldetag: 04.06.2015
(51) Int. Cl.: B60K 17/04, B62M 23/00, B62K 25/00, B62M 7/02, F16D 3/33, F16D 3/43, B62K 21/00

(54) **VORDERRADBAUGRUPPE FÜR EIN MOTORRAD**
FRONT WHEEL ASSEMBLY FOR A MOTORCYCLE
UNITE DE ROUE AVANT POUR UNE MOTO

(30) Priorität: 05.06.2014 DE 102014210822
(43) Veröffentlichungstag der Anmeldung: 09.12.2015
(73) Patentinhaber: Koch, Guido, 76149 Karlsruhe (DE)
(72) Erfinder: Koch, Guido, 76149 Karlsruhe (DE)
(74) Vertreter: Maikowski & Ninnemann Patentanwälte Partnerschaft mbB

(56) Entgegenhaltungen:
- US-A- 5 054 572
- US-A- 5 954 586
- US-A1- 2011 130 212

## Beschreibung

Die vorliegende Erfindung betrifft insbesondere eine Vorderradbaugruppe zum Antreiben eines Vorderrades eines Allrad-Motorrads nach dem Oberbegriff des Anspruchs 1.

Insbesondere Geländemotorräder, die abseits befestigter Straßen eingesetzt werden, ziehen besondere Vorteile aus einem Antrieb beider Räder, wenn z. B. bei weichem Untergrund die Traktion des Hinterrades nicht ausreicht, um das Motorrad vorwärts zu bewegen. Bisherige Versuche der massentauglichen Realisierung scheitern zumeist daran, dass der jeweilige Zusatznutzen in der Regel mit einem Zuwachs an Masse, insbesondere der ungefederten Masse am Vorderrad erkauft wird. Dies kann die Fahrbarkeit des Motorrads erheblich beeinträchtigen, so dass insgesamt die nachteiligen Effekte in der Regel überwiegen.

Bisher bekannte Vorderradbaugruppen zum Antreiben eines Motorrad-Vorderrades weisen üblicherweise wenigstens eine anzutreibende Nabe, an der das Vorderrad angeordnet wird, sowie eine drehbare Antriebswelle im Bereich des Vorderrades und wenigstens ein Wellengelenk zur Übertragung eines Drehmoments von der Antriebswelle an die Nabe auf. Über ein Wellengelenk oder mehrere Wellengelenke wird hierbei erreicht, dass das Vorderrad weiterhin eingelenkt werden kann, obwohl über die Antriebswelle ein Drehmoment an das Antriebsrad übertragen wird. Eine solche Lösung ist beispielsweise aus der US-A 5,054,572 bekannt. Hier ist das Wellengelenk oberhalb der Drehachse der Nabe bzw. des Vorderrades angeordnet, so dass eine parallel zur Hinterachse verlaufende Antriebswelle ein Drehmoment an einen Wellenzapfen überträgt, der über das Wellengelenk gelenkig mit der Antriebswelle verbunden ist. Der Beugepunkt des Wellengelenks muss dabei in der Lenkachse liegen. Das Drehmoment wird hierbei über eine zusätzliche, innerhalb des Vorrades umlaufende Kette von dem über das Wellengelenk mit der Antriebswelle gekoppelten Wellenzapfen an eine zentral in der Nabe und drehfest hiermit verbundene Achswelle übertragen.

Bei der aus der US-A 5,054,572 bekannten Vorderradbaugruppe ist nachteilig, dass die das Drehmoment letztlich an die Vorderrad-Nabe übertragende Kette beim Einlenken stets mit verschwenkt wird. Hierdurch kann eine unerwünschte Unwucht entstehen, insbesondere bei hohen Fahrgeschwindigkeiten. Durch den zusätzlichen Kettentrieb innerhalb des Vorderrades weist dieses zudem eine vergleichsweise hohe Massenträgheit auf. Dies wirkt sich nachteilig auf die Beherrschbarkeit des Fahrzeugs aus. Darüber hinaus ist bei der aus der US-A 5,054,572 bekannten Vorderradbaugruppe der maximale Lenkwinkel für das Vorderrad vergleichsweise klein. Bei größeren Beugewinkeln würden unzulässig große Schwankungen der Drehgeschwindigkeiten entstehen.

Eine Achsschenkellenkung, wie sie in der US-A 5,054,572 offenbart ist, kam anstelle der üblichen Lagerung des Vorderrades über eine Teleskopgabel auch bei konventionell angetriebenen Motorrad-Modellen praktisch zum Einsatz, wie die Modelle Bimota Tesi und Yamaha GTS 1000 zeigen. Ein kommerzieller Erfolg konnte hiermit aber nie erzielt werden. Aus der Praxis sind im Übrigen auch Vorderradbaugruppen für Allrad-Motorrädern mit Achsschenkellenkung bekannt, bei denen ebenfalls an wenigstens einer Stelle ein Wellengelenk vorgesehen ist, um ein Drehmoment an das weiterhin lenkbare Vorderrad zu übertragen. Ein Beispiel hierfür ist das seitens der Gebrüder Savard Anfang der 90er Jahre entwickelte Allrad-Motorrad, das ebenfalls eine Achsschenkellenkung aufwies und dessen Vorderrad über einen zusätzlichen, beim Lenken mitgeschwenkten Kettentrieb am Vorderrad verfügte. Diese Lösung konnte sich aber am Markt nicht durchsetzen, da die eingangs beschriebenen Nachteile auch bei diesen Modellen die erzielbaren Vorteile überwogen.

Ausgehend hiervon liegt der vorliegenden Erfindung daher die Aufgabe zugrunde, ein Motorrad bereitzustellen, dessen Lenkbarkeit und Fahrbarkeit verbessert sind und bei dem insbesondere die Drehmomentübertragung an das Vorderrad unter Vermeidung der zuvor genannten Nachteile möglich ist, so dass auch ein verbessertes Allrad-Motorrad bereitgestellt werden kann.

Diese Aufgabe wird sowohl mit einer Vorderradbaugruppe des Anspruchs 1 als auch des Anspruchs 11 gelöst.

Gemäß der Erfindung ist dabei eine Vorderradbaugruppe mit einem Wellengelenk vorgeschlagen, das zentral an der das Vorderrad tragenden Nabe angeordnet ist, so dass die Drehachse der Antriebswelle und die Rotationsachse der Nabe vorzugsweise in einer für die Geradeausfahrt vorgesehenen Stellung eines Motorradlenkers zusammenfallen. Ferner verbindet das vorgeschlagene homokinetische Wellengelenk die Antriebswelle und die Nabe nicht nur unmittelbar drehmomentübertragend miteinander, sondern auch derart gelenkig, dass eine Winkelstellung der rotierenden Nabe relativ zu der drehenden und die Nabe antreibenden Antriebswelle über einen Lenker des Motorrads veränderbar ist. Die Lenkachse verläuft demzufolge durch den Beugepunkt des Wellengelenks und damit durch die Rotationsachse des Vorderrades.

Insbesondere im Unterschied zu der Vorderradbaugruppe der US-A 5,054,572 wird hier somit eine parallel zur Hinterachse verlaufende Antriebswelle über ein einzelnes zentral angeordnetes Wellengelenk drehmomentübertragend mit der Nabe des Vorderrads gekoppelt. Hierbei werden die Nabe und die Antriebswelle derart gelenkig miteinander verbunden, dass die Nabe unterschiedliche Winkelstellungen zu der Antriebswelle einnehmen kann. Durch die Anordnung und Ausbildung des Wellengelenks kann somit ein zusätzliches beim Einlenken mitbewegtes umlaufendes Kraftübertragungselement, wie z. B. ein Riemen oder eine Kette, im Bereich des Vorderrades entfallen, um an dieses das Drehmoment zu übertragen. Lediglich zur Drehmomentübertragung an die Antriebswelle ist z.B. ein umlaufendes, der Einfederungsbewegung folgendes und von einem Motor des Motorrades angetriebenes Kraftübertragungselement, z. B. ein Riemen oder einer Kette, vorgesehen, so dass eine rein mechanische Drehmomentübertragung an das Vorderrad realisiert wird, die erfahrungsgemäß äußerst robust, zuverlässig und für größere Drehmomente und Fahrgeschwindigkeiten ohne weiteres geeignet ist. Ein Kraftübertragungselement, über das rein mechanisch ein Drehmoment von dem Motor des Motorrades an die Nabe gebracht wird, kann selbstverständlich auch eine Kardanwelle umfassen.

Das Wellengelenk ist vorzugsweise zentral in der Nabe angeordnet und hierin wenigstens teilweise, bevorzugt vollständig untergebracht. Bei dem damit vorzugsweise äußerst kompakt bauendenden Wellengelenk ist ein winkelbeweglicher Teil fest mit der Nabe bzw. der Vorderrad-Felge verbunden, so dass ein Drehmoment in das Vorderrad eingeleitet werden kann, während die Beweglichkeit der Lenkung und die Einfederung im Vergleich zu einem nicht angetriebenen Vorderrad unbeeinflusst bleiben.

Erfindungsgemäß ist das Wellengelenk als homokinetisches Wellengelenk und damit als so genanntes Gleichlaufgelenk ausgebildet. Das homokinetische Wellengelenk stellt somit sicher, dass die Winkelgeschwindigkeiten der Antriebswelle und der angetriebenen Nabe stets gleich sind. Es entstehen somit keine Drehgeschwindigkeit- oder Drehmomentschwankungen, wie sie beispielsweise im Fall eines einfachen Kardangelenkes auftreten würden. Die Drehbewegungen verlaufen vielmehr gleichförmig, so dass das Vorderrad unabhängig von dem jeweiligen Lenkeinschlag mit weiterhin großer Laufruhe dreht.

Vorzugsweise ist das homokinetische Wellengelenk derart ausgebildet, dass hierdurch ausschließlich eine Winkelbeweglichkeit gegeben ist, aber weder ein Wellenversatz noch ein Axialversatz zugelassen wird. Zudem ist das homokinetische Wellengelenk bevorzugt derart ausgebildet, dass es ein Verschwenken der Nabe um eine Lenkachse relativ zu der Antriebswelle um mehr als 50°, vorzugsweise um mehr als 60° gestattet. Derart kann das Vorderrad aus einer für die Geradeausfahrt vorgesehene Null-Grad-Stellung jeweils um mehr als 25 bzw. mehr als 30° nach rechts oder links eingeschlagen werden.

In einer Ausführungsvariante ist das Wellengelenk hierfür kugellos ausgebildet, das heißt, ohne Kugeln zur Kraftübertragung und damit nicht als Gleichlauf-Kugelgelenk. Bei einem Gleichlauf-Kugelgelenk wurde beobachtet, dass beim Einlenken vergleichsweise große Reibkräfte entstehen, die ein rückwirkendes Moment erzeugen und damit unter Umständen die Lenkung beeinflussen können. Ein bevorzugtes Wellengelenk nutzt ein kardanisches Grundprinzip, bei dem ein Gleichlauf über eine doppelte Anordnung von gleichgebeugten Kardangelenken erreicht wird. Eine bevorzugte Ausprägung des Wellengelenks umfasst hierbei jedoch zwei wenigstens miteinander verbundene und relativ zueinander drehbar gelagerte Rahmenteile, von denen ein äußeres Rahmenteil an der Nabe drehbeweglich gelagert ist und ein inneres Rahmenteil an einem mit der Antriebswelle drehfest verbundenen Teil drehbeweglich gelagert ist, so dass ein Drehmoment über die beiden Rahmenteile an die Nabe geleitet wird und hierüber zyklische Gleichlaufschwankungen zwischen An- und Abtriebsseite des Gelenks vermieden werden können.

Üblicherweise ist hierbei das äußere Rahmenteil an der Nabe senkrecht zu einer Rotationsachse der Nabe drehbeweglich gelagert, während das innere Rahmenteil an dem mit der Antriebswelle drehfest verbundenen Teil senkrecht zu einer Drehachse der Antriebswelle drehbeweglich gelagert ist. Darüber hinaus ist dann das innere Rahmenteil zwischen wenigstens zwei Rahmensegmenten des äußeren Rahmenteils und damit "innerhalb" des äußeren Rahmenteils angeordnet. An diesen wenigstens zwei Rahmensegmenten des äußeren Rahmenteils ist dann das innere Rahmenteil zusätzlich drehbeweglich gelagert. Vorzugweise ist das innere Rahmenteil an den Rahmensegmenten des äußeren Rahmenteils derart drehbeweglich gelagert, dass eine damit definierte Drehachse senkrecht zu einer Drehachse des äußeren Rahmenteils an der Nabe sowie senkrecht zu einer Drehachse des inneren Rahmenteils an der Antriebswelle verläuft.

In einer Ausführungsvariante weist das Wellengelenk wenigstens einen ersten und einen zweiten Gelenkhebel gleicher Länge auf. Der wenigstens eine erste Gelenkhebel und der wenigstens eine zweite Gelenkhebel sind dabei jeweils mit einem ersten Hebelende an einem verschieblich gelagerten Gelenkelement angelenkt. Während der wenigstens eine erste Gelenkhebel mit seinem anderen, zweiten Hebelende an einem mit der Antriebswelle drehfest verbundenen Teil angelenkt ist, ist der wenigstens eine zweite Gelenkhebel mit einem anderen, zweiten Hebelende an der Nabe angelenkt. Die ersten und zweiten Gelenkhebel sind somit einerseits gemeinsam an einem verschieblich gelagerten Gelenkelement des Wellengelenks angelenkt und andererseits entweder an einem mit der Antriebswelle drehfest verbundenen Teil oder an der gelenkig hiermit verbundenen Nabe angelenkt. Über die Verschieblichkeit des Gelenkelements innerhalb des Wellengelenks, vorzugsweise entlang einer im Wesentlichen senkrecht zu der Drehachse der Antriebswelle verlaufenden Achse, ist ein Längen- und Kraftausgleich möglich, wenn die Drehachse der Nabe winklig zu der Drehachse der Antriebswelle verläuft. Vorzugsweise ist hierbei das Gelenkelement verschieblich an den beiden relativ zueinander drehbaren Rahmenteilen des Wellengelenks gelagert und zwar verschieblich entlang der Drehachse, bezüglich der die beiden Rahmenteile relativ zueinander drehbeweglich sind.

Indem der erste und zweite Gelenkhebel die gleiche Länge aufweisen, jeweils an einem ersten Anlenkpunkt an dem verschieblichen Gelenkelement angelenkt sind und sich zweite Anlenkpunkte der Gelenkhebel jeweils in gleichem Abstand zur Drehachse und zum Beugepunkt an dem mit der Antriebswelle drehfest verbundenen Teil bzw. der Nabe befinden, ergeben sich für die beiden Gelenkhebel symmetrische Winkellagen. Eine Achse, entlang der das Gelenkelement längsverschieblich ist, liegt derart immer auf einer Winkelhalbierenden des zwischen dem ersten und zweiten Gelenkhebel definierten Winkels.

Bei der Ausbildung als homokinetisches Wellengelenk rotiert das verschieblich gelagerte Gelenkelement bei einer gleichbleibenden Winkelstellung der Nabe in einer Gleichlaufebene um eine Drehachse, die in einem von der Winkelstellung der Nabe abhängigen, gleichbleibenden Winkel zu der Drehachse der Antriebswelle verläuft. Dieser Winkel der Gleichlaufebene zu der Drehachse entspricht stets der Hälfte des Lenkwinkels. Die Gleichlaufebene wird folglich durch die Lenkachse und eine Winkelhalbierende aufgespannt, die den Winkel zwischen der Rotationsachse des Vorderrades bzw. der Nabe und der Drehachse der Antriebswelle teilt.

Die Antriebswelle kann drehfest mit einem Gelenkpfannenteil verbunden sein, wobei dann in einer Gelenkpfanne des Gelenkpfannenteils ein Gelenkkopf eines Radlenkers winkelbeweglich gelagert ist, an dem die Nabe drehbar gelagert ist. Über die Kugel-Pfannen-Paarung zwischen Gelenkpfanne und Gelenkkopf können somit sämtliche auf das Vorderrad wirkende Kräfte in eine die Antriebswelle tragende Schwinge eingeleitet werden, während über die weiteren Komponenten des Wellengelenks eine vorzugsweise homokinetische Drehmomentübertragung zwischen Antriebswelle und Nabe sichergestellt ist.

Gleichwohl eine Kugel-Pfannen-Paarung zwischen Radlenker und Antriebswelle bevorzugt ist, kann eine Ausführung ohne Gelenkpfanne und Gelenkkopf realisiert sein, bei der die während der Fahrt auftretenden Kräfte am Vorderrad über alternative und entsprechend dimensionierte Bauteile des Wellengelenks aufgenommen werden.

Der Radlenker der Vorderradbaugruppe kann Teil einer Achsschenkellenkung für das Motorrad sein. Die Antriebswelle ist hierbei an einer an einem Rahmen des Motorrads zu befestigenden Schwinge drehbar gelagert, die die Einfederungsbewegung ausführt. Der zur Veränderung der Winkelstellung der Nabe vorgesehene Radlenker, der die Nabe drehbar lagert, ist dann ferner an einem ebenfalls an dem Motorradrahmen zu befestigenden und vorzugsweise oberhalb der Schwinge angeordnetem Hilfslenker angelenkt, der ebenfalls der Einfederungsbewegung folgt. Derart kann dann eine Winkelstellung der Nabe relativ zu der Antriebswelle durch ein Schwenken des Radlenkers um eine Lenkachse verändert werden, die durch den Anlenkpunkt des Radlenkers an dem Hilfslenker und den durch das Wellengelenk vorgegebenen Gelenkpunkt für die Winkelbeweglichkeit der Nabe relativ zu der Antriebswelle definiert ist. Die Anlenkung des Radlenkers an dem Hilfslenker kann hierbei über ein Universalgelenk realisiert sein, so dass der Radlenker nicht nur bezüglich der Lenkachse geschwenkt werden kann, sondern die Neigung des Radlenkers zur Vertikalen verändert werden kann. Der Radlenker ist hierbei schwenkbar an dem Hilfslenker oberhalb der Schwinge angelenkt und gleichzeitig über das Wellengelenk an die Antriebswelle und deren Schwinge gekoppelt.

In einer derartigen Ausführungsvariante schneiden sich mithilfe des zentral an der Nabe angeordneten Wellengelenks die Radlagerachse bzw. die Rotationsachse der Nabe und damit des Vorderrades, die Lenkachse und die Drehachse der Antriebswelle in einem Gelenkpunkt des Wellengelenks. Ein Gelenkpunkt zwischen der Nabe und der Antriebswelle, die an der das Vorderrad führenden Schwinge angeordnet ist, liegt somit im Schnittpunkt der Lenkachse mit der Rotationsachse des Vorderrades. Hierdurch lässt sich erreichen, dass sich die Einfederungsbewegung, die Lenkbewegung und die Antriebsbewegung am Vorderrad nicht gegenseitig beeinflussen. Folglich sind hier die Schwinge über wenigstens ein erstes Gelenk und der Hilfslenker über wenigstens ein zweites Gelenk an dem Rahmen angelenkt, während der Radlenker über ein drittes Gelenk an dem Hilfslenker angelenkt ist und das Wellengelenk ein viertes Gelenk definiert, über das der Radlenker relativ zu der Antriebswelle verschwenkt werden kann und die Nabe gelenkig mit der Antriebswelle gekoppelt ist. Das zentral an der Nabe angeordnete Wellengelenk ist hier also Teil eines Viergelenksystems für die Vorderradaufhängung.

In einer bevorzugten Ausführungsvariante sind der Radlenker und die die Antriebswelle lagernde und das Vorderrad führende Schwinge auf unterschiedlichen Seiten des Vorderrads angeordnet. Hierunter wird insbesondere verstanden, dass ein Lagerabschnitt des Radlenkers, der eine Lagerachse für die rotierbare Nabe trägt, an einer Seite des Vorderrades angeordnet ist und die Antriebswelle auf der anderen gegenüberliegenden Seite.

Zum Verschwenken des Radlenkers und damit der Übertragung einer Lenkbewegung an die Radnabe und das hieran angeordnete Vorderrad ist vorzugsweise eine hydraulische Lenkeinrichtung vorgesehen. Die rein mechanische Übertragung eines Drehmoments von einem Antriebsmotor des Motorrads an das Vorderrad über das Wellengelenk ist somit hier mit einem hydraulischen System gekoppelt, um eine Lenkbewegung an das Vorderrad zu übertragen.

Nach Anspruch 11 ist eine Vorderradbaugruppe für ein Vorderrad eines Motorrads vorgesehen, mittels der eine Lenkbewegung von einem Lenker des Motorrads an das Vorderrad übertragbar ist und bei der eine hydraulische Lenkeinrichtung mit einer translatorisch verstellbaren Schubstange vorgesehen ist, mittels der eine Lenkbewegung an ein mit dem Vorderrad gekoppeltes, schwenkbar gelagertes Lenkteil übertragbar ist. Die Schubstange ist Teil eines doppeltwirkenden Nehmerzylinders der hydraulischen Lenkeinrichtung mit einem verschieblichen Kolben, wobei
- der Kolben zwei Kammern für Hydraulikflüssigkeit voneinander trennt,
- an dem Kolben wenigstens zwei axial zueinander beabstandete Dichtungen zur Abdichtung der zwei Kammern gegenüber einem dazwischen liegenden Zwischenraum vorgesehen sind und
- in dem Kolben wenigstens ein Verbindungkanal ausgebildet ist, über den der Zwischenraum mit einem Referenzdruck beaufschlagt ist, der an den wenigstens zwei Dichtungen anliegt.

Das Lenkteil kann, bei einer Achsschenkellenkung einen Radlenker umfassen, an dem das Vorderrad drehbar gelagert ist und der an einem mit einem Rahmen des Motorrads verbundenen Hilfslenker angelenkt ist, so dass der Radlenker um eine Lenkachse schwenkbar ist. Das Vorderrad ist hierbei an einer Schwinge geführt, die ebenfalls an dem Rahmen des Motorrads zu befestigen ist. Der Radlenker ist dann mit der translatorisch verstellbaren Schubstange der hydraulischen Lenkeinrichtung gekoppelt, mittels der der Radlenker um die Lenkachse geschwenkt und so eine Lenkbewegung an das Vorderrad übertragen werden kann.

In einer Ausführungsvariante ist die mit dem verschwenkbaren Lenkteil verbundene Schubstange Teil eines Nehmerzylinders der hydraulischen Lenkeinrichtung, wobei der Nehmerzylinder mit wenigstens einem Geberzylinder der hydraulischen Lenkeinrichtung gekoppelt ist, der mit einem Lenker des Motorrads zu verbinden ist. Bevorzugt ist der Geberzylinder als doppeltwirkender Hydraulikzylinder ausgebildet und über zwei Hydraulikleitungen mit dem ebenfalls doppeltwirkenden Nehmerzylinder verbunden. Im bestimmungsgemäß montierten Zustand wird folglich beim Verschwenken des Lenkers des Motorrads Hydraulikflüssigkeit in einer ersten Kammer des doppeltwirkenden Geberzylinders verdrängt und ein Kolben des Geberzylinders verschoben. Das verdrängte Flüssigkeitsvolumen wird über eine der Hydraulikleitungen einer Kammer des Nehmerzylinders zugeführt und damit die Schubstange des Nehmerzylinders verstellt, die hierdurch auf das Lenkteil einwirkt, um die Nabe bzw. das Vorderrad zu verschwenken. Ein von dem Geberzylinder ausgeschobenes Flüssigkeitsvolumen wird folglich über eine Hydraulikleitung zwischen den beiden Zylindern der entsprechenden Seite des Nehmerzylinders zugeführt und bewirkt dort eine Bewegung der Schubstange und damit des Radeinschlags. Das auf einer Gegenseite des Kolbens des Nehmerzylinders verdrängte Flüssigkeitsvolumen wird in gleicher Weise von der entsprechenden Seite des Geberzylinders geschluckt.

Beispielsweise ist der im Lenkkopf des Motorradrahmens drehbar gelagerte Lenker seitlich beabstandet mit einer Schubstange eines hydraulischen, doppeltwirkenden Geberzylinders verbunden, der mit seinem Zylindergehäuse an dem Rahmen des Motorrads fixiert ist. Ein hydraulischer, ebenfalls doppelt wirkender Nehmerzylinder ist beabstandet hierzu ebenfalls an dem Rahmen fixiert und über seine aus- und einfahrbare Schubstange mit dem Radlenker verbunden. Die Schubstange des Nehmerzylinders kann hierbei über ein Universalgelenk seitlich beabstandet zu der Lenkachse mit dem Radlenker verbunden sein, während ein Zylindergehäuse des Nehmerzylinders rahmenseitig derart fixiert ist, dass die Zylinderachse des Nehmerzylinders im Wesentlichen parallel zu dem Hilfslenker verläuft, an dem der Radlenker angelenkt ist. Die Länge des Nehmerzylinders kann hierbei so gewählt sein, dass bei einem Lenkeinschlag von 0° (Geradeausfahrt) der Nehmerzylinder mit dem Hilfslenker der Achsschenkellenkung in Seitenansicht ein Parallelogramm definiert, das über den gesamten Federweg den Radlenker neutral ausrichtet. In eingelenktem Zustand ändert sich die Länge des Nehmerzylinders durch das Ein- oder Ausfahren der Schubstange, so dass dann kein Parallelogramm mehr vorliegt.

Grundsätzlich sind beide Seiten eines Nehmerzylinders bevorzugt über flexible Hydraulikleitungen mit den gegengleichen Seiten eines Geberzylinders verbunden, der unmittelbar mit einem Lenker oder einer Lenkstange des Motorrads gekoppelt wird.

In einer Ausführungsvariante kann ein mechanisches Einstellelement vorgesehen sein, mittels dem ein Volumen für eine Hydraulikflüssigkeit der hydraulischen Lenkeinrichtung reduzierbar ist, um einen statischen Vordruck innerhalb des zugehörigen Hydrauliksystems einzustellen. Ein solches Einstellelement kann durch Stangenführungen an dem Nehmer- oder Geberzylinder ausgebildet sein, die in den jeweiligen Zylinderraum hineingedreht werden können. Hierdurch wird eine Kammer für die darin eingeschlossene Hydraulikflüssigkeit reduziert. Sollte Luft in dem Hydrauliksystem vorhanden sein, so wird diese durch die Verringerung des Flüssigkeitsvolumens zunächst komprimiert. Ab einem gewissen Druckniveau geht die Luft dann in Lösung und wird in der Flüssigkeit eingeschlossen. Sollten keine äußeren Kräfte wirken, wird der Druck auf der einen Kolbenseite durch den Kolben des jeweiligen Zylinders direkt auch auf die andere Kolbenseite übertragen. Derart herrscht beiderseits des Kolbens eines doppeltwirkenden Zylinders derselbe Druck, der über das Einstellelement voreingestellt werden kann, um ein direktes Ansprechen der Lenkung sicherzustellen. Die hydraulische Lenkeinrichtung kann somit relativ einfach spielfrei und mit der nötigen Steifigkeit eingestellt werden, so dass selbst kleinste Bewegungen an den Radlenker und damit an das Vorderrad übertragen werden.

Der innerhalb des hydraulischen Systems vorhandene und insbesondere an einem Kolben eines Nehmer- und/oder Geberzylinders anliegende statische Vordruck kann selbstverständlich elektronisch überwacht werden, so dass ein Nutzer automatisch akustisch und/oder visuell auf die Notwendigkeit zur Nachjustierung über das Einstellelement hingewiesen wird, sofern der Vordruck unter einen vorgegebenen Schwellwert fällt.

Alternativ oder ergänzend kann eine Pumpeinrichtung vorgesehen sein, mittels der beim Starten des Motorrads automatisch ein vordefinierter statischer Vordruck in der hydraulischen Lenkeinrichtung erzeugbar ist. Durch die Pumpeinrichtung wird an mindestens einer der Kolbenseiten unter Druck Hydraulikflüssigkeit nachgefüllt, wenn dies durch eine Sensoreinrichtung als notwendig detektiert wird. Ein Rückfluss wird hierbei z. B. über ein Rückschlagventil unterbunden. Eine Steuerelektronik kann dann bei einer Startprozedur des Motorrads den Vordruck innerhalb des hydraulischen Systems, z. B. über wenigstens einen Drucksensor, automatisch überprüfen und gegebenenfalls durch Einspeisen zusätzlicher Flüssigkeit diesen Vordruck nachjustieren. Im Fahrbetrieb ist die Pumpeinrichtung vorzugsweise außer Funktion, um nicht während der Fahrt für einen Nutzer überraschend die Steifigkeit der Lenkung zu verändern. Über den wenigstens einen mit der Steuerelektronik gekoppelten Drucksensor könnte aber weiterhin eine Warnfunktion verbunden sein, um den Nutzer auf einen etwaigen Abfall des Systems- bzw. Vordrucks hinzuweisen.

Ein Motorrad, das auf Basis einer erfindungsgemäßen Vorderradbaugruppe mit einem Allradantrieb ausgestattet ist, bietet insbesondere hinsichtlich seiner Fahreigenschaften erhebliche Vorteile gegenüber bisher bekannten Lösungen und ermöglicht bei relativ geringem zusätzlichen Gewicht die mechanische Kopplung der Vorderradnabe mit dem Motorradmotor. Dabei können vergleichsweise große Leistungen auch am Vorderrad abgerufen werden, so dass ein solches Allrad-Motorrad auch bei widrigsten Umgebungsbedingungen ebenso nutzbar ist wie auf befestigten Straßen und mit hoher Geschwindigkeit.

Weitere Vorteile und Merkmale der Erfindung werden bei der nachfolgenden Beschreibung von Ausführungsbeispielen anhand der Figuren deutlich werden.

Hierbei zeigen:
- Fig. 1A - 1C: ein Ausführungsbeispiel eines Allrad-Motorrads mit einer erfindungsgemäßen Vorderradbaugruppe in unterschiedlichen Ansichten;
- Fig. 2: in vergrößertem Maßstab die Vorderradbaugruppe des Motorrades der Figuren 1A - 1C in montiertem Zustand;
- Fig. 3A - 3C: in unterschiedlichen Drehstellungen einer Antriebswelle die Vorderradbaugruppe in Einzeldarstellung, jedoch ohne Darstellung eines zur Lagerung eines Radlenkers vorgesehenen Hilfslenkers und einer zur Lagerung der Antriebswelle vorgesehenen Schwinge;
- Fig. 4A - 4B: mit gegenüber den Darstellungen der Figuren 3A - 3C abweichendem Betrachtungswinkel die Vorderradbaugruppe in unterschiedlichen Drehstellungen der Antriebswelle;
- Fig. 5A - 5C: die Vorderradbaugruppe in Draufsicht in unterschiedlichen Drehstellungen der Antriebswelle;
- Fig. 6: eine Draufsicht auf die Vorderradbaugruppe mit ihrem Wellengelenk ohne eine Nabe für das Vorderrad;
- Fig. 7A - 7B: geschnittene Seitenansichten der Vorderradbaugruppe mit Blick auf das Wellengelenk;
- Fig. 8: in teilweiser Explosionsdarstellung und vergrößertem Maßstab das Wellengelenk der Vorderradbaugruppe;
- Fig. 9A - 9B: das Wellengelenk mit geschnittener Antriebswelle und teilweise ausgeblendeten Komponenten zur Verdeutlichung des inneren Aufbaus des Wellengelenks;
- Fig. 10: eine vergrößerte Seitenansicht des Motorrads der Figuren 1A - 1C mit Blick auf einen Teil einer hydraulischen Lenkeinrichtung zum Verstellen eines mit der Nabe des Vorderrades gekoppelten Radlenkers;
- Fig. 11: ausschnittsweise und in geschnittener Darstellung ein in der Figur 10 dargestellter doppelt wirkender Nehmerzylinder der hydraulischen Lenkeinrichtung.

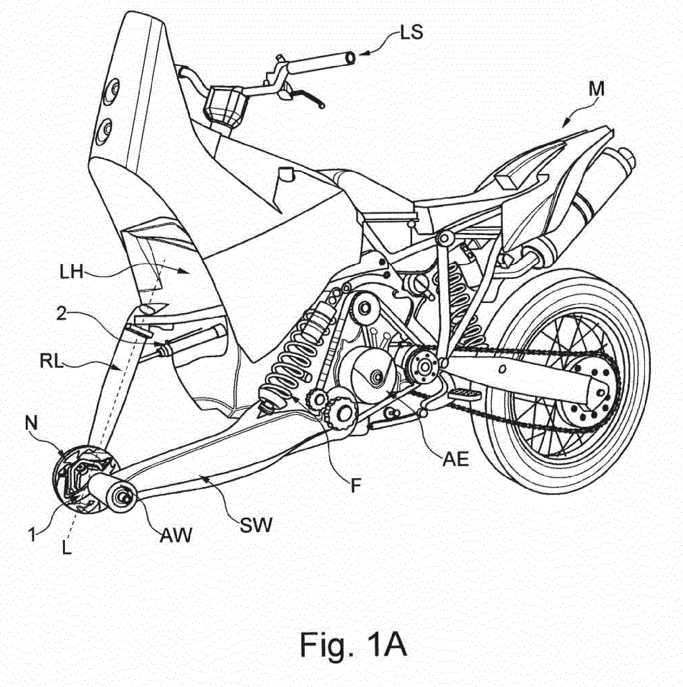

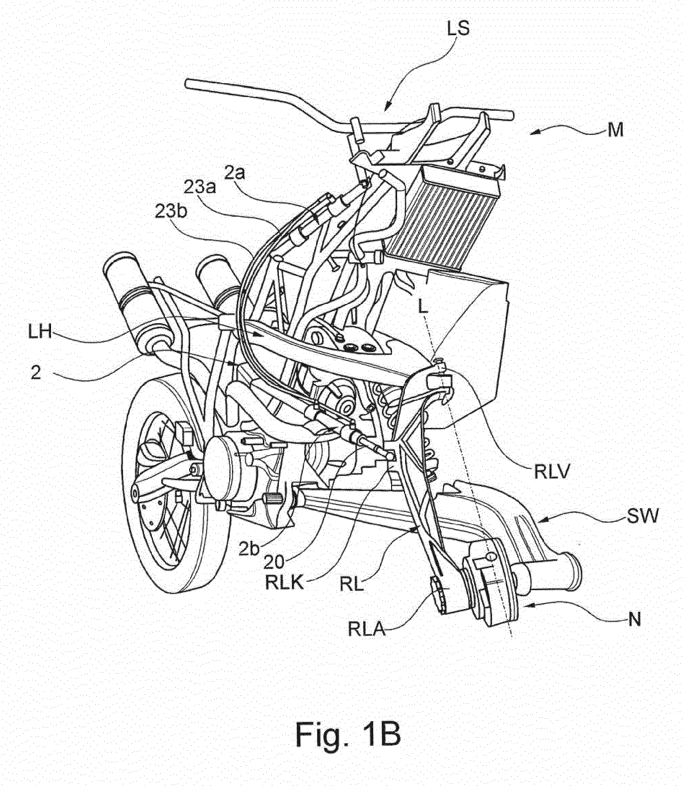

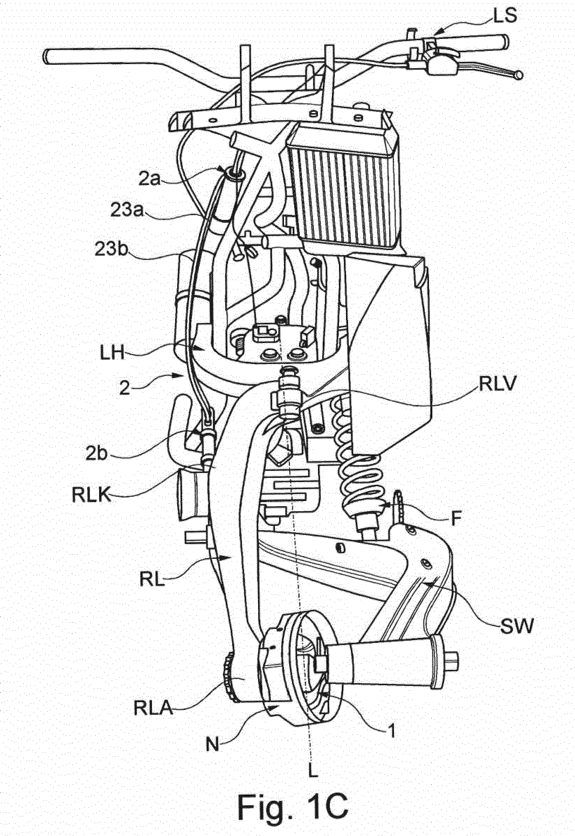

In den Figuren 1A, 1B und 1C ist ein erfindungsgemäßes Ausführungsbeispiel eines Allrad-Motorrads M mit einer Variante einer erfindungsgemäßen, eine Antriebsbaugruppe bildenden Vorderradbaugruppe in verschiedenen Ansichten dargestellt. Das Motorrad M verfügt über einen Antriebsmotor mit einer Antriebseinheit AE, über das ein Antriebsmoment mit Hilfe einer umlaufenden hinteren Antriebskette an ein Hinterrad des Motorrads geleitet wird. Zusätzlich ist die Antriebseinheit AE mit einem Riemengetriebe ausgestattet, bei dem ein Antriebsriemen dreiecksförmig umläuft und den Motor des Motorrads M auch mit einem (hier nicht dargestellten) Vorderrad koppelt, so dass auch an das Vorderrad ein Antriebsdrehmoment übertragen werden kann. Die Antriebseinheit AE ist über eine hier nicht näher dargestellte Riemenscheibe mit einer Überholkupplung ausgestattet, so dass ein Drehmoment an das Vorderrad ab etwa 5%-igem Schlupf am Hinterrad übertragen werden kann.

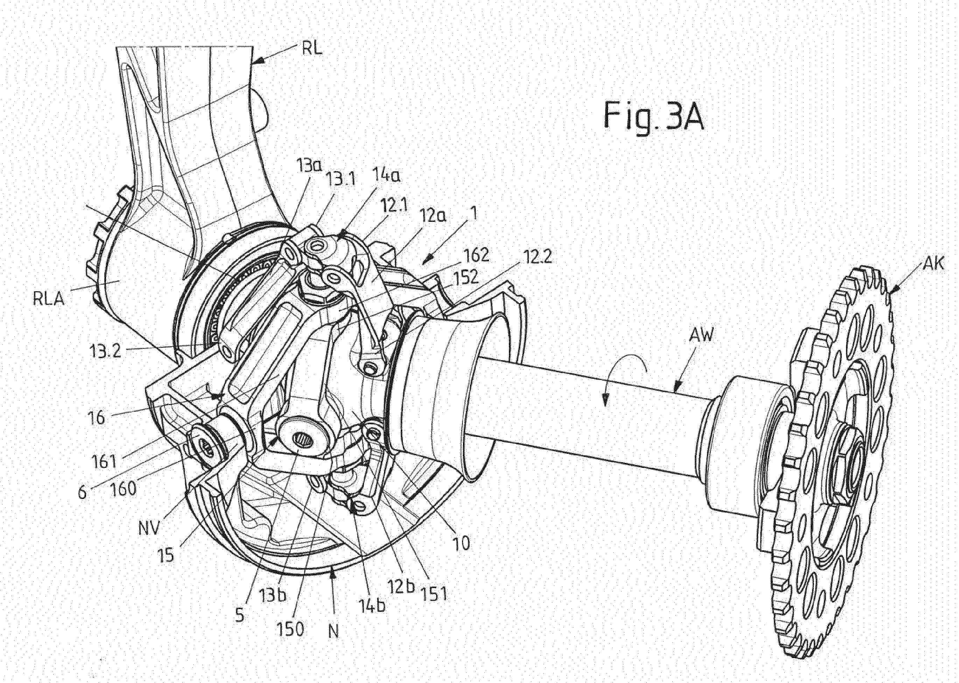

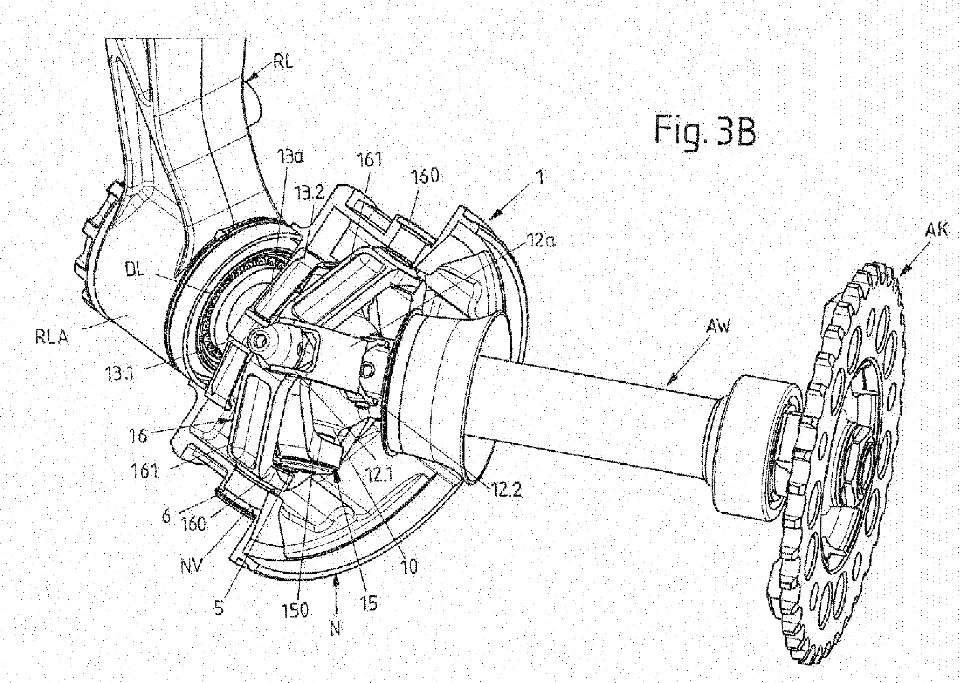

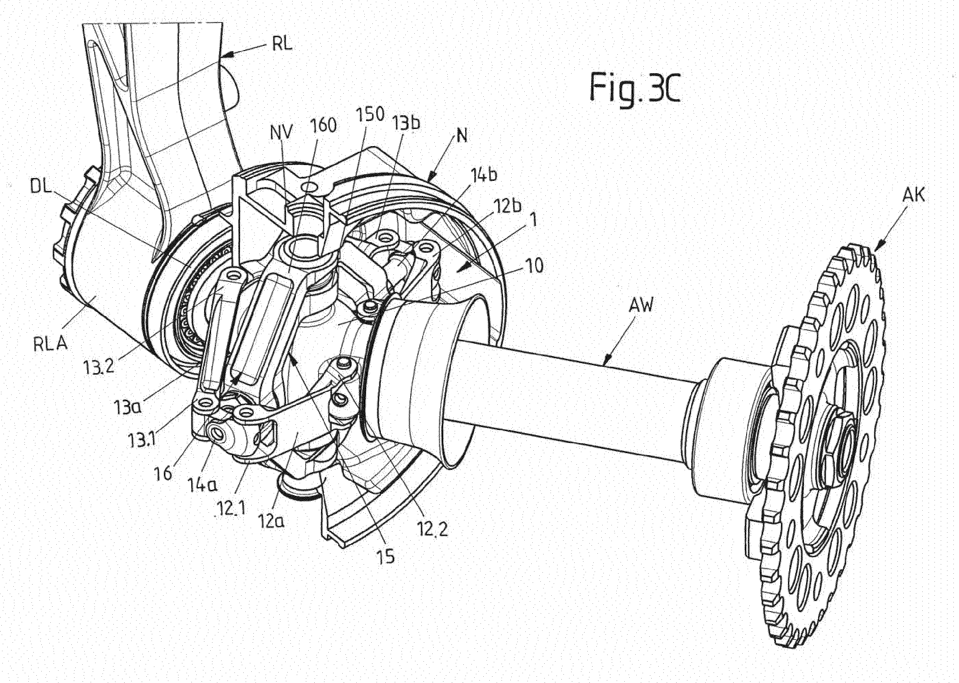

Zur rein mechanischen Übertragung eines Drehmoments an das Vorderrad ist eine zusätzliche Antriebskette als umlaufendes Kraftübertragungselement innerhalb einer Y-förmigen Schwinge SW geführt. Die Schwinge SW ist für die Führung des Vorderrads vorgesehen und über ein einen Stoßdämpfer integrierendes Federbein F federnd an einem Rahmen des Motorrads M gelagert. An einem vorderen Ende des längserstreckten Arms der Schwinge SW ist eine Antriebswelle AW drehbar gelagert. Diese Antriebswelle AW trägt ein drehfest damit verbundenes Antriebselement in Form eines Antriebskettenrades AK (vgl. insbesondere auch die Fig. 3A - 3C). Die drehfeste Verbindung zwischen Antriebswelle AW und Antriebskettenrad AK ist vorliegend über eine Keilwellenverbindung realisiert.

Über die zusätzliche in der Schwinge SW umlaufende Antriebskette, die einerseits mit einem Zahnrad der Antriebseinheit AE und andererseits mit dem Antriebskettenrad AK der Antriebswelle AW formschlüssig in Verbindung steht, wird folglich ein Drehmoment von der Antriebseinheit AE an die Antriebswelle AW übertragen. Die Antriebswelle AW überträgt das anliegende Drehmoment über ein Wellengelenk 1 an eine Nabe N des Vorderrades. Hierbei ist das Wellengelenk 1 zentral an der Nabe N angeordnet und verbindet die Antriebswelle AW und die Nabe N drehmomentübertragend und derart gelenkig miteinander, dass eine Winkelstellung der rotierenden Nabe N relativ zu der drehenden und die Nabe N antreibenden Antriebswelle AW über einen Lenker LS des Motorrads M weiterhin veränderbar ist. Das Wellengelenk 1 ist hierbei als homokinetisches, winkelbewegliches Wellengelenk ausgebildet, so dass eine Winkelgeschwindigkeit der Antriebswelle AW und eine Winkelgeschwindigkeit der angetriebenen Nabe N gleich sind. Das nachfolgend noch im Detail veranschaulichte und näher beschriebene Wellengelenk 1 überträgt hierbei ein Drehmoment von der Antriebswelle AW an die Nabe N ohne Drehgeschwindigkeit- und Drehmomentschwankungen.

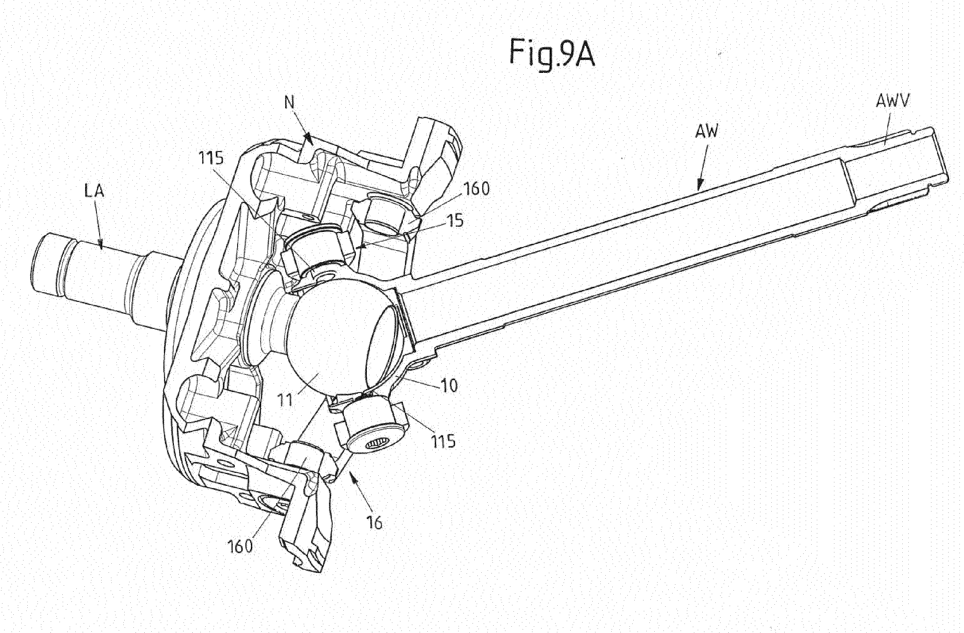

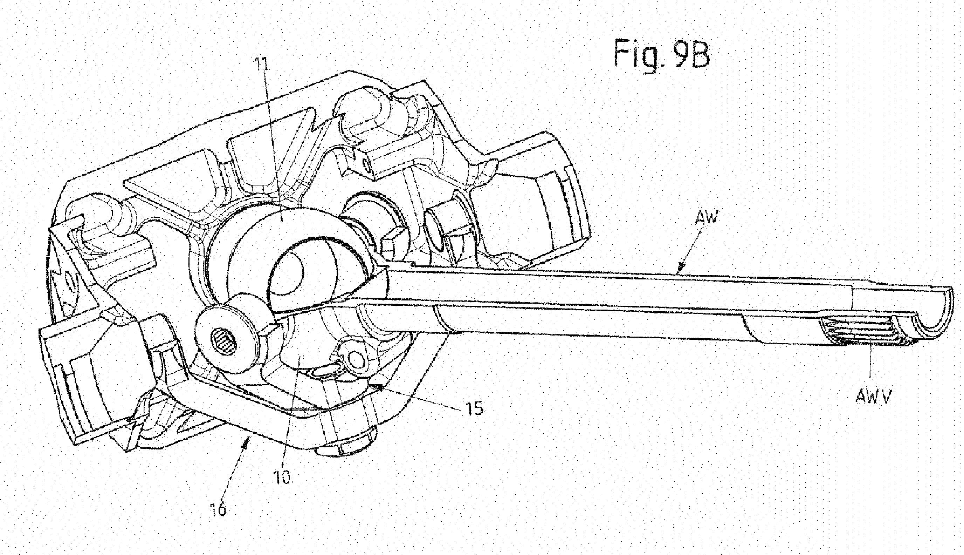

Die Nabe N ist an einem Radlenker RL drehbar gelagert. Hierfür bildet der hebelartig ausgebildete Radlenker RL an seinem unteren Ende einen Lagerabschnitt RLA aus, in dem eine Lagerachse LA drehbar gelagert ist (vgl. auch Fig. 9A). Die Nabe N ist an dieser Lagerachse LA über wenigstens ein Drehlager DL drehbar gelagert. An seinem anderen, oberen Ende ist der Radlenker RL an einem Hilfslenker LH verschwenkbar angelenkt. Die Anbindung des Radlenkers RL an den Hilfslenker LH erfolgt hierbei vorzugsweise über ein Universalgelenk an einem Verbindungsabschnitt RLV des Radlenkers RL. Über die gelenkige Verbindung der Nabe N mit der Antriebswelle AW und die Anlenkung des Radlenkers RL oberhalb der Nabe N an dem Hilfslenker LH kann eine Winkelstellung der Nabe N und damit des hieran gelagerten Vorderrades über den Radlenker RL verändert werden. Der Radlenker RL definiert folglich eine Lenkachse L, die durch die Gelenkstellen an dem Hilfslenker LH und in dem Wellengelenk 1 verläuft und die Drehachse der Antriebswelle AW kreuzt.

Bei der dargestellten Ausführungsvariante ist das Vorderrad somit in einer geschobenen Schwinge geführt und eine so genannte Achsschenkellenkung über den verschwenkbaren Radlenker RL realisiert. Der Hilfslenker LH ist hierbei ebenfalls an dem Rahmen des Motorrads M fixiert und hieran angelenkt, so dass während der Fahrt das Vorderrad über die Schwinge SW über das Federbein F gegen die Fahrbahn gedrückt und in das Vorderrad eingeleitete Stöße abfangen werden zu können. Der gabelartig ausgebildete Hilfslenker LH ist hierbei an seinen zwei sich gegenüberliegenden Schenkeln an dem Rahmen des Motorrads M schwenkbar befestigt.

Zum Verschwenken des Radlenkers RL um die Lenkachse L ist eine hydraulische Lenkeinrichtung 2 vorgesehen, die über eine Schubstange 20 an dem Radlenker RL angreift. Ein Ende der Schubstange 20 ist hierbei gelenkig mit einem Kraftübertragungsabschnitt RLK des Radlenkers RL verbunden. Dieser Kraftübertragungsabschnitt RLK befindet sich unterhalb des Hilfslenkers LH an dem Radlenker RL. Die Schubstange 20 ist dabei innerhalb eines Zylindergehäuses eines Nehmerzylinders 2b der hydraulischen Lenkeinrichtung 2 verschieblich geführt. Dieser Nehmerzylinder 2b ist doppeltwirkend ausgebildet und mit einem Geberzylinder 2a gekoppelt, so dass durch eine Lenkbewegung an dem Lenker LS des Motorrads M die Schubstange 20 ein- oder ausgefahren wird, und damit der Radlenker RL entsprechend um die Lenkachse L verstellt wird. Die Schubstange ist hierfür an ihrem vorstehenden Stangenende 200 an dem Kraftübertragungsabschnitt RLK des Radlenkers RL angelenkt, vorliegend über eine einen drehbar gelagerten Lagerstift aufweisende Gelenkverbindung. Der Lenker LS ist dabei mit dem ebenfalls doppeltwirkenden Geberzylinder 2a oberhalb des Nehmerzylinders 2b gekoppelt. Dieser Geberzylinder 2a steht über Hydraulikleitungen 23a und 23b mit dem darunter liegenden Nehmerzylinder 2b in Wirkverbindung, so dass ein an dem Geberzylinder 2a durch eine Lenkbewegung verdrängte Hydraulikflüssigkeit auf einen Kolben der Schubstange 20 einwirkt und diese entsprechend ein- oder ausfährt. Bei einer Lenkbewegung an dem Lenker LS wird folglich an dem Geberzylinder 2a eine Hydraulikflüssigkeit verdrängt und über eine Hydraulikleitung 23a oder 23b in eine Kammer des Nehmerzylinders 2b gedrückt. Gleichzeitig wird die hierbei in der anderen Kammer des Nehmerzylinders 2b verdrängte Hydraulikflüssigkeit in die korrespondierende Kammer des Geberzylinders 2a gedrückt.

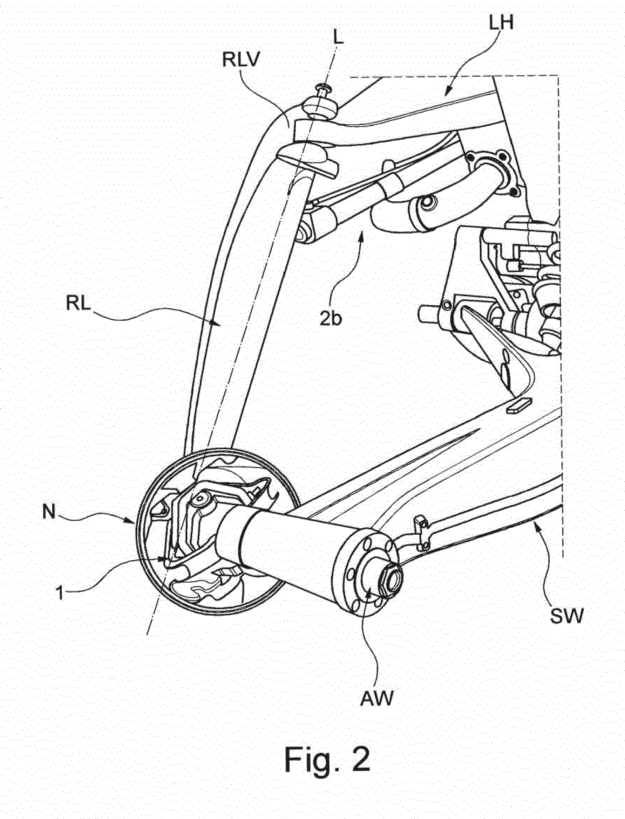

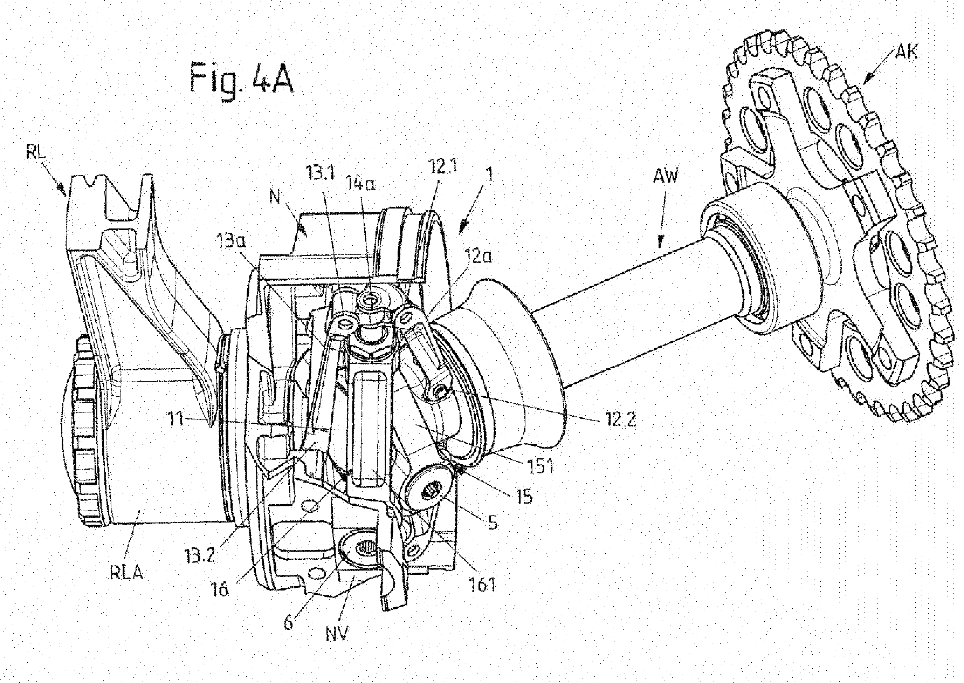

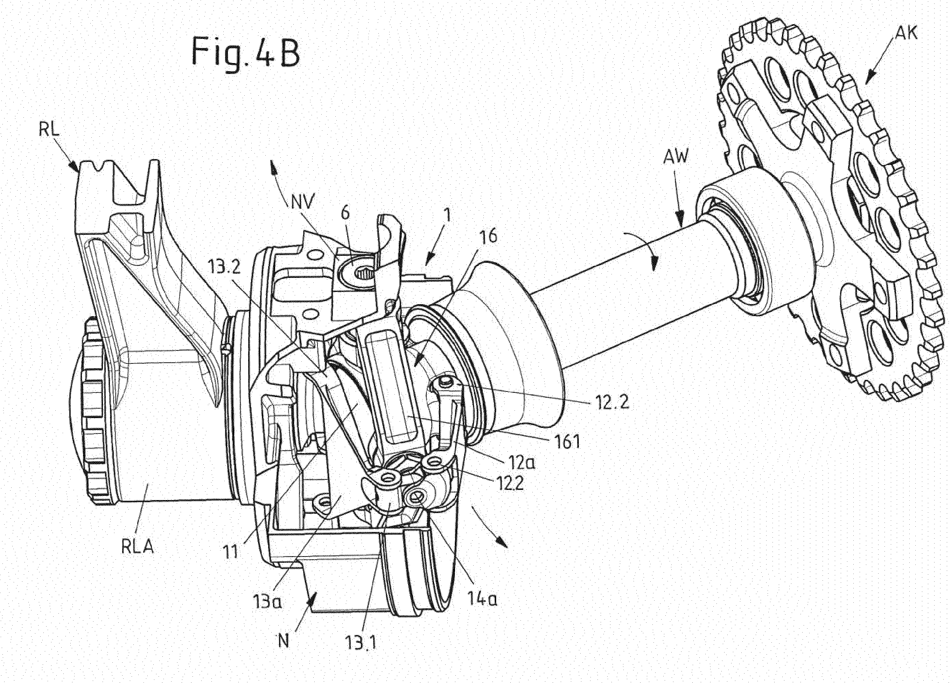

Die Art der dargestellten Vorderradführung ermöglicht, z. B. über eine Kette oder einen Riemen, die Rotationsbewegung am Ausgang des Antriebsmotors des Motorrads M mechanisch an die Antriebswelle AW zu bringen, die parallel zur Drehachse des Hinterrads verläuft. Diese Antriebswelle AW trägt im Zentrum der Vorderradnabe N das winkelbewegliche Wellengelenk 1, deren winkelbeweglicher Teil fest mit dem Vorderrad bzw. dessen Nabe N verbunden ist. Dieses Wellengelenk 1 ist wie bereits erläutert, als homokinetisches Wellengelenk ausgebildet, bei dem Gleichlaufschwankungen ausgeschlossen sind und dessen Aufbau und Funktionsweise anhand der weiteren Figuren 2 und 3A bis 9B näher erläutert werden soll. In den Figuren 3A bis 3C, 4A bis 4B, 5A bis 5C, 6, 7A bis 7B, 8 und 9A bis 9C sind hierfür unterschiedliche Ansichten und Drehstellungen der Antriebswelle AW bei einer nach rechts ausgelenkten und damit winklig zu der Antriebswelle AW rotierenden Nabe N veranschaulicht.

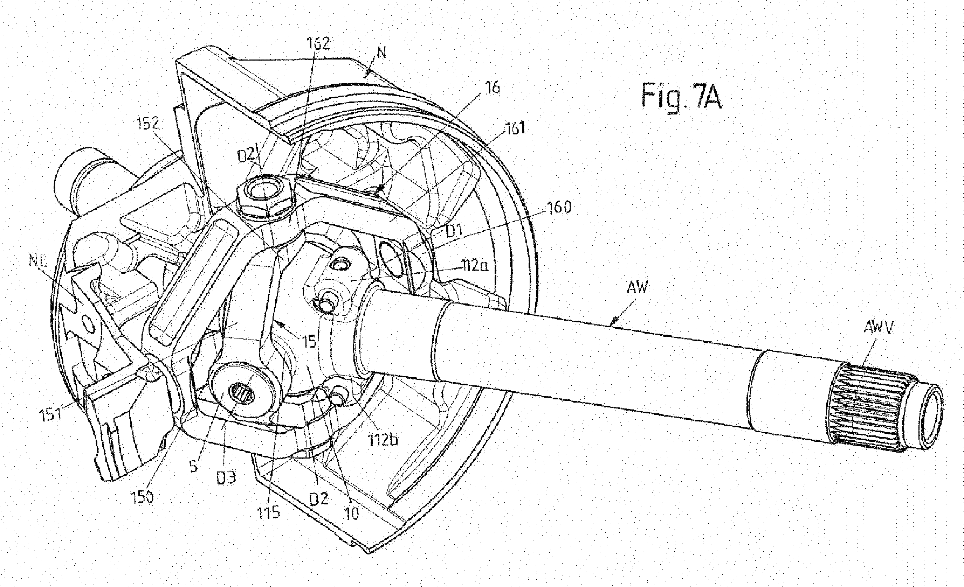

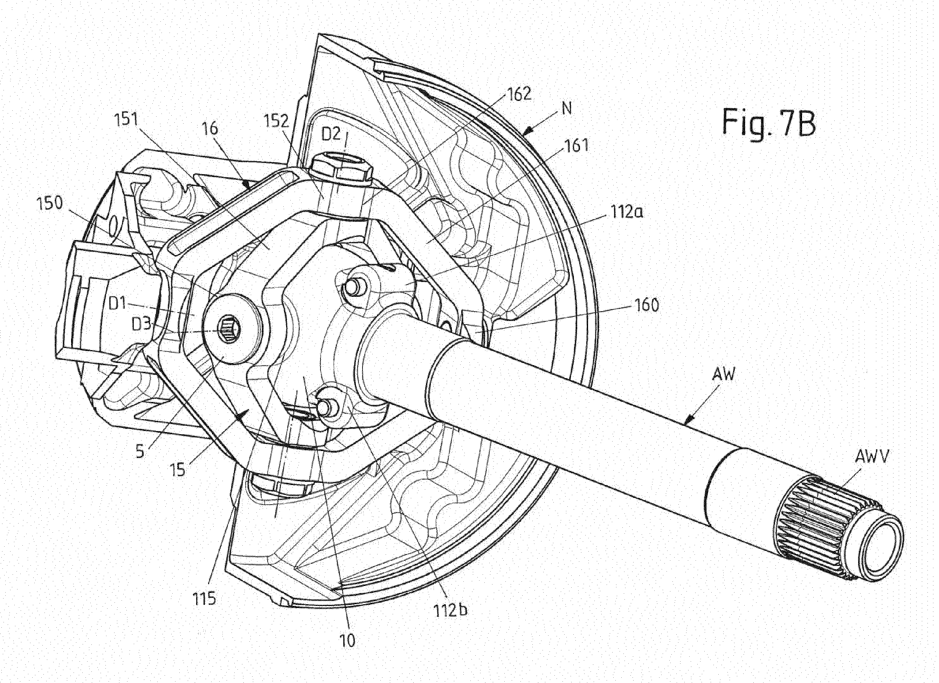

Über das Wellengelenk 1 sind die Antriebswelle AW und die Nabe N gelenkig und drehmomentübertragend miteinander verbunden. Wie bereits zuvor erläutert, ist die Nabe N hierbei über ein Drehlager DL drehbar an einer Lagerachse LA gelagert, die der Lagerabschnitt RLA des Radlenkers RL trägt. Diese Lagerachse LA bildet an ihrem einen Ende einen Gelenkkopf 11 aus, der in einem kugelförmigen Gelenkpfannenteil 10 der Antriebswelle AW ruht, so dass über diese Kugel-Pfannen-Paarung eine Winkelstellung der Nabe N zu der Antriebswelle AW verändert werden kann. Um hierbei aber weiterhin ohne Drehgeschwindigkeit- und Drehmomentschwankungen ein Drehmoment von der Antriebswelle AW an die Nabe N übertragen zu können, weist das Wellengelenk 1 zwei gelenkig miteinander verbundene Gelenkrahmen 15 und 16 sowie mehrere Gelenkhebel 12a, 12b und 13a, 13b auf. Das dargestellte Wellengelenk 1 beruht dabei auf einem kardanischen Grundprinzip, bei dem ein Gleichlauf über eine doppelte Anordnung von gleichgebeugten Kardan- bzw. Kreuzgelenken erreicht wird und ein Zwischenglied zu einem einzelnen Zwischenzapfen zusammengeschrumpft ist. Dementsprechend ist ein das Gelenkpfannenteil 10 einrahmender innerer Gelenkrahmen 15 um eine zu der Drehachse der Antriebswelle AW senkrechte Achse D3 an dem Gelenkpfannenteil 10 drehbeweglich gelagert. Ein äußerer Gelenkrahmen 16, der sowohl den inneren Gelenkrahmen 15 als auch den kugelförmigen Gelenkkopf 11 der Antriebswelle AW und den Gelenkkopf 10 rahmenförmig umgibt, ist ferner innerhalb der Nabe N angeordnet und hieran um eine Drehachse D1 drehbeweglich gelagert, die im Wesentlichen senkrecht zu der Drehachse der Nabe N verläuft (vgl. hierzu insbesondere Fig. 7A).

Zur Fixierung des äußeren Gelenkrahmens 16 und dessen drehbeweglicher Lagerung an der Nabe N sind zwei Lagerelemente 6 vorgesehen. Diese Lagerelemente 6 sind jeweils durch eine Lageröffnung an einer Verbindungsstelle NV der Nabe N hindurchgeführt und drehfest mit einem Fixierungsbereich 160 des äußeren Gelenkrahmens 16 verbunden. Jedes an dem äußeren Gelenkrahmen 16 fixierte Lagerelement 6 ist hierbei in der Lageröffnung der Verbindungsstelle NV der Nabe N drehbar gelagert und definiert damit die körperliche Achse D1, um die der äußere Gelenkrahmen 16 an der Nabe N drehbar gelagert ist.

Die drehbewegliche Lagerung des inneren Gelenkrahmens 15 an dem Gelenkpfannenteil 10 erfolgt über zwei sich gegenüberliegende Lagerelemente 5. Diese Lagerelemente 5 definieren die körperliche Achse D3, um die der innere Gelenkrahmen 15 an dem Gelenkpfannenteil 10 drehbar gelagert ist. Jedes Lagerelement 5 ist hierbei durch eine Lageröffnung eines Fixierungsbereichs 115 des inneren Gelenkrahmens 15 hindurch geführt und an einem Befestigungsabschnitt 115 des Gelenkpfannenteils 10 fixiert, z. B. eingedreht.

Zusätzlich sind die beiden Gelenkrahmen 15 und 16 zweimal an sich gegenüber liegenden Verbindungsbereichen 152 und 162 miteinander verbunden und zwar derart, dass sie um eine weitere Achse D2 relativ zueinander drehbar sind. Beispielsweise ist hierfür jeweils ein Lagerbolzen durch eine Öffnung in eines Verbindungsbereichs 162 des äußeren Gelenkrahmens 16 hindurch geführt und in eine Gewindeöffnung des angrenzenden Verbindungsbereichs 152 des inneren Gelenkrahmens 15 eingedreht, so dass dieser Lagerbolzen in der Lageröffnung des äußeren Gelenkrahmens 16 drehbar gelagert ist und damit der innere Gelenkrahmen 15 an dem äußeren Gelenkrahmen 16 - ähnlich zu einer kardanischen Aufhängung - angelenkt ist. Die Achse D2 verläuft hierbei sowohl senkrecht zu der Achse D1 als auch zu der Achse D3.

Im Bereich der Verbindung zwischen den beiden Gelenkrahmen 15 und 16 sind ferner Gelenkelemente in Form von Gelenkzapfen 14a und 14b axial entlang der Achse D2 verschieblich gelagert. Die beiden in zueinander entgegengesetzten Richtungen vorstehenden Gelenkzapfen 14a und 14b erstrecken sich dabei jeweils entlang der die Drehachse der Antriebswelle AW kreuzenden Achse D2 und sind in eine hohlzylindrische Lageröffnung an den Verbindungsbereichen 152, 162 der beiden Gelenkrahmen 15 und 16 eingesteckt, so dass sie hieran jeweils verschieblich angeordnet sind.

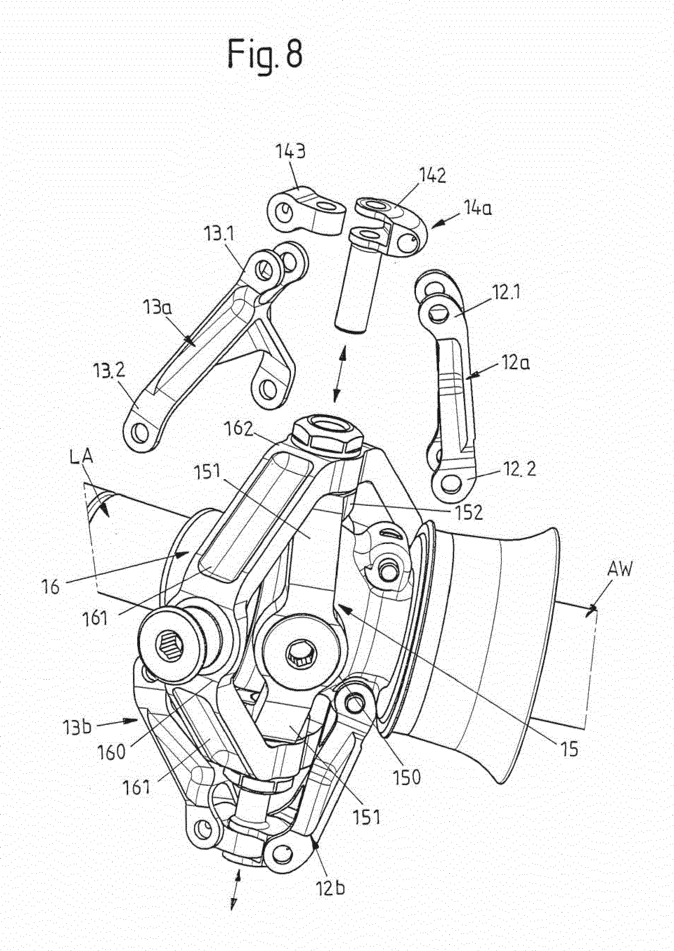

Wie insbesondere in der teilweisen Explosionsdarstellung der Fig. 8 ersichtlich ist, weist jeder Gelenkzapfen 14a oder 14b zwei gelenkig miteinander verbundene Lagerteile 142 und 143 auf. Diese Lagerteile 142 und 143 sind um die Achse D2 relativ zueinander verschwenkbar, jedoch in axialer Richtung nicht zueinander verschiebbar. Dabei ist an jedem Lagerteil 142 oder 143 ein Gelenkhebel 12a, 12b oder 13a, 13b angelenkt. Ein erster Gelenkhebel 12a oder 12b ist dabei jeweils mit einem Hebelende 12.1 an dem zugeordneten Gelenkzapfen 14a oder 14b (an dessen Lagerteil 142) angelenkt und mit dem anderen Hebelende 12.2 an dem Gelenkpfannenteil 10 angelenkt. Der Gelenkpfannenteil 10 bildet hierfür zwei Hebellager 112a und 112b mit beidseitig vorstehenden Lagerzapfen für die gelenkige Verbindung mit dem jeweiligen Hebelende 12.2 eines ersten Hebels 12a oder 12b aus.

Die zweiten Hebel 13a und 13b sind jeweils mit einem ersten Hebelende 13.1 ebenfalls an dem zugehörigen Gelenkzapfen 14a oder 14b (an dessen Lagerteil 143) angelenkt und mit ihrem jeweiligen anderen Hebelende 13.2 an der Nabe N oder einem hieran fixierten Teil angelenkt. Derart ist ein verschieblicher Gelenkzapfen 14a oder 14b jeweils mit zwei Hebeln 12a, 13a oder 12b, 13b verbunden, von denen ein erster Hebel 12a oder 12b mit dem Gelenkkopf 11 der Antriebswelle AW verbunden ist und der andere, zweite Hebel 13a oder 13b unmittelbar mit der angetriebenen Nabe N verbunden ist (beispielsweise an einem z. B. in der Figur 7A ersichtlichen Hebellagerabschnitt NL der Nabe N).

Bei einer koaxialen Ausrichtung der Lagerachse LA der Nabe N und der Antriebswelle AW, die einer Lenkerstellung für die Geradeausfahrt entspricht und bei der folglich ein Lenkeinschlag von 0° vorliegt, sind auch die (Dreh-) Achsen D1 und D3 der beiden Gelenkrahmen 15 und 16 an der Nabe N bzw. dem Gelenkpfannenteil 10 zueinander koaxial ausgerichtet. Vier nach Art von Gabelarmen ausgebildete Rahmensegmente 161, die jeweils einen Fixierungsbereich 160 mit einem Verbindungsbereich 162 des äußeren Gelenkrahmens 16 miteinander verbinden, verlaufen hierbei dann jeweils parallel zu vier innen liegenden, ebenfalls nach Art von Gabelarmen ausgebildeten Rahmensegmenten 151 des inneren Gelenkrahmen 15, die jeweils einen Fixierungsbereich 150 mit einem Verbindungsbereich 152 des inneren Gelenkrahmens 15 miteinander verbinden. Die senkrecht zu den beiden Achsen D1 und D3 sowie senkrecht zu der Drehachse der Antriebswelle AW orientierte Achse D2, entlang der die Gelenkzapfen 14a und 14b jeweils verschieblich sind, verläuft dann ebenfalls senkrecht zu der Lagerachse LA der Nabe N. Hierbei ist zu beachten, dass, wenn die die Nabe N in der dargestellten Stellung, d.h., bei gleichbleibendem Lenkeinschlag, rotiert, sich die Gelenkzapfen 14a und 14b nicht verschieben, da sich der Abstand zwischen den antriebswellenseitigen Hebellagerabschnitten 112a, 112b und den nabenseitigen Hebellagerabschnitten NL nicht verändert.

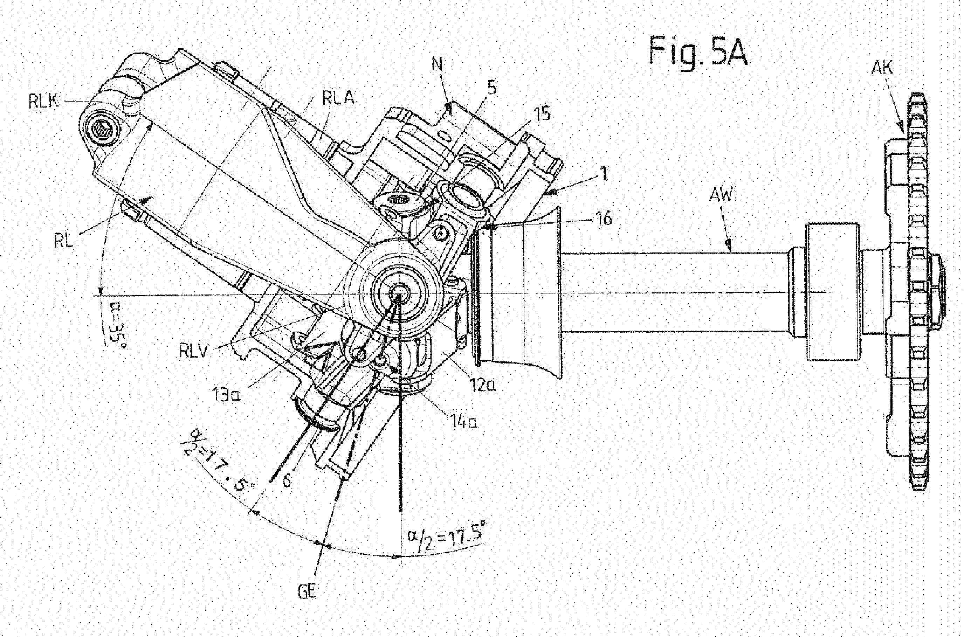

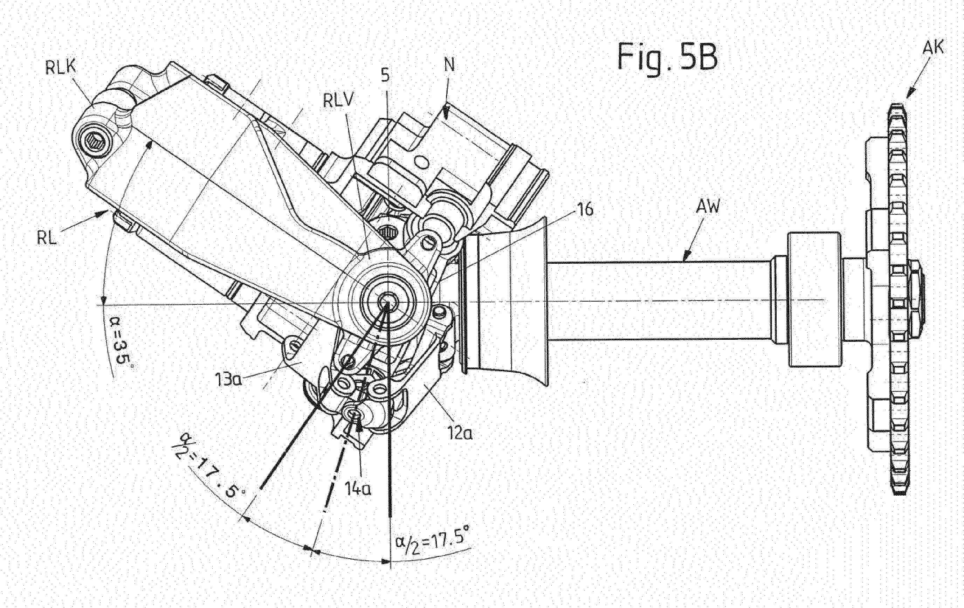

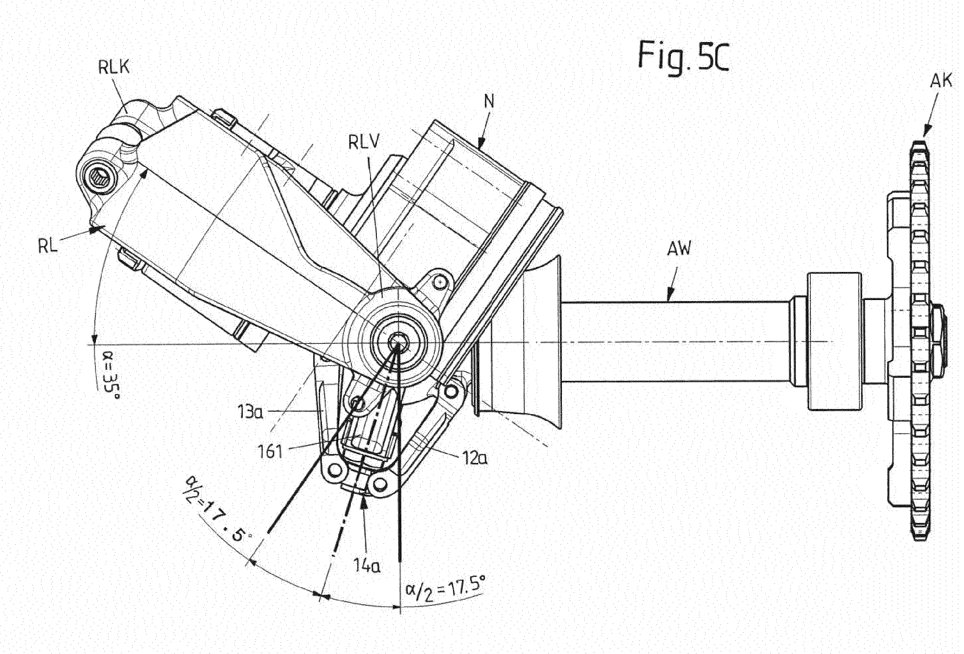

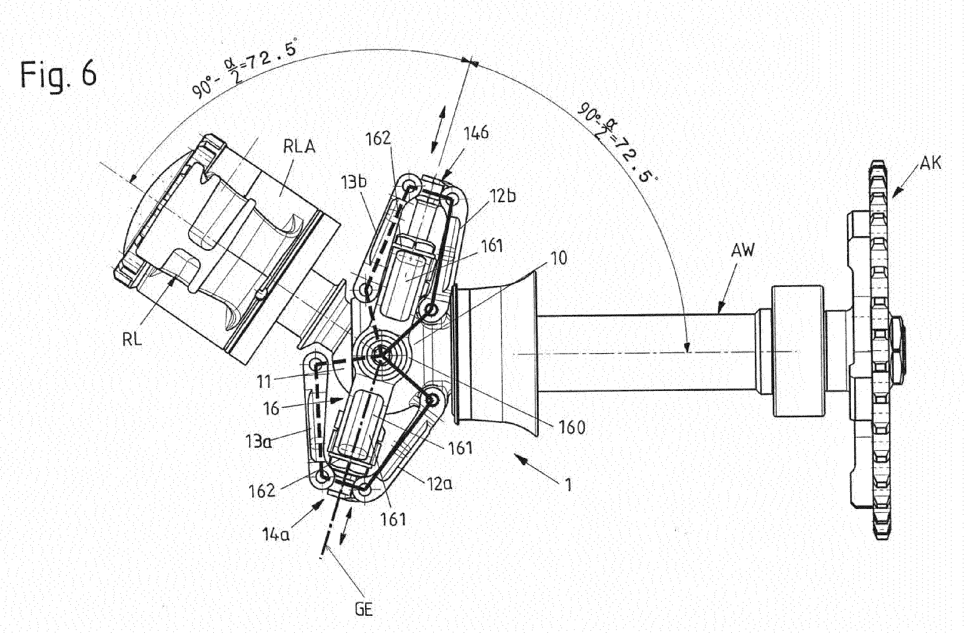

Bei einem Lenkeinschlag, so dass die Lagerachse LA wie in den Figuren 3A bis 9B dargestellt unter einem Lenkwinkel α zu der Antriebswelle AW orientiert ist, verläuft die Achse D2 unter einem von 90° abweichenden Winkel zu der Drehachse der Antriebswelle AW. So rotieren die beiden Gelenkzapfen 14a und 14b in einer Gleichlaufebene GE entsprechend der Figur 5A, die um einen von dem Lenkwinkel α abhängigen Winkel zu der Drehachse der Antriebswelle AW geneigt ist. Indem die ersten und zweiten Gelenkhebel 12a, 12b und 13a, 13b die gleiche Länge aufweisen und jeweils an dem verschieblichen Gelenkzapfen 14a oder 14b angelenkt sind, liegen die Achse D2, entlang der die Gelenkzapfen 14a und 14b längsverschieblich sind, und die Gleichlaufebene GE immer entlang einer Winkelhalbierenden des zwischen einem ersten und einem zweiten Gelenkhebel 12a und 13a oder 12b und 13b definierten Winkels bzw. einer Winkelhalbierenden des zwischen der Rotationsachse der Nabe N und der Drehachse der Antriebswelle AW eingenommen Winkels (vgl. die Draufsicht der Figur 6). Bei dem in der vorliegenden Ausführungsvariante maximal möglichen Lenkeinschlag von α = 35° beträgt dieser (Neigungs-) Winkel somit beispielsweise α/2 = 17,5°. Die bei gleichbleibendem Lenkeinschlag sich in ihrer Neigung nicht verändernde und entlang der Lenkachse L erstreckende Gleichlaufebene GE wird dabei durch den dargestellten Aufbau des homokinetischen Wellengelenks 1 mit den beiden gelenkig miteinander verbundenen inneren und äußeren Gelenkrahmen 15 und 16 sowie den hieran verschieblich geführten Gelenkzapfen 14a und 14b und den vier Gelenkhebeln 12a, 12b und 13a, 13b erreicht, die jeweils einerseits an dem zugeordneten Gelenkzapfen 14a oder 14b und andererseits entweder an dem mit der Antriebswelle AW drehfesten Gelenkpfannenteil 10 oder der Nabe N angelenkt sind.

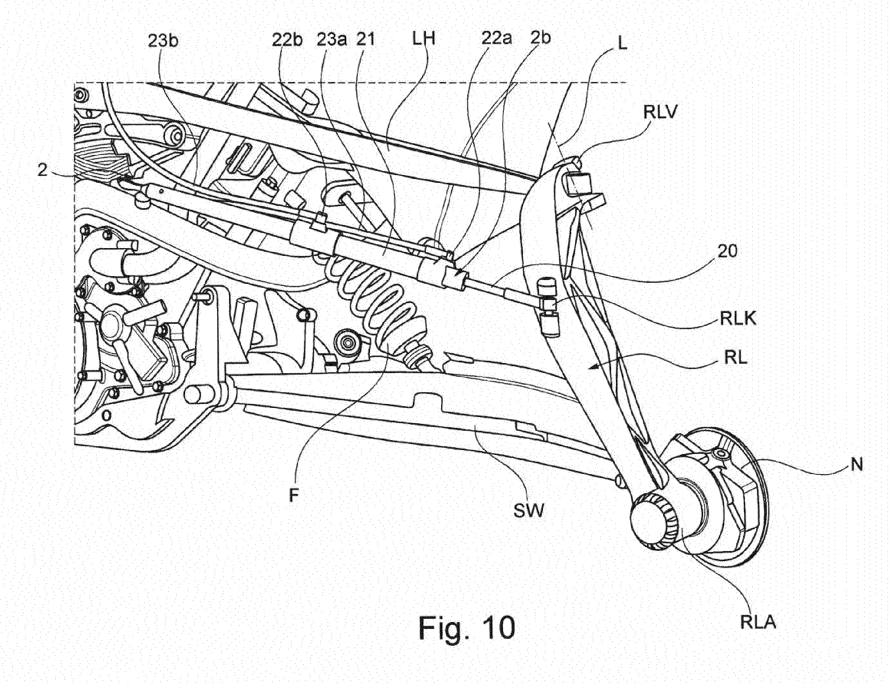

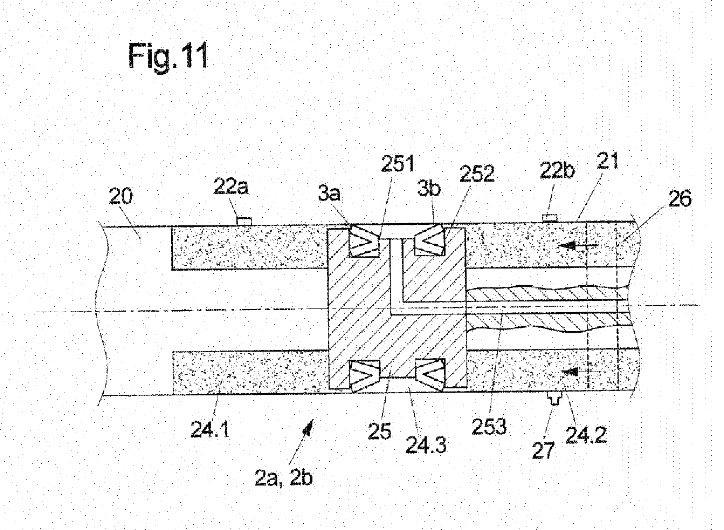

Mit den Figuren 10 und 11 wird ferner noch im Detail die hydraulische Lenkeinrichtung 2 näher veranschaulicht, mittels der eine Lenkbewegung des Lenkers LS an den Radlenker RL übertragen wird, um eine Winkelstellung der Nabe N zu der an der Schwinge SW drehbar gelagerten Antriebswelle AW zu verändern.

Wie insbesondere in der Seitenansicht der Figur 10 dargestellt, ist vorliegend der Nehmerzylinder 2a so an dem Gestell des Motorrads M angeordnet und mit dem Radlenker RL verbunden, das die Schubstange 20 translatorisch entlang einer Achse verschiebbar ist, die im Wesentlichen parallel zu dem Hilfslenker LH verläuft, an dem der Radlenker RL oberhalb der Schwinge SW angelenkt ist. Bei Geradeausfahrt bildet somit der Nehmerzylinder 2a mit dem Achsschenkel der dargestellten Achsschenkellenkung ein Parallelogramm, das über den gesamten Einfederweg den Radlenker RL neutral ausrichtet. Im eingelenkten Zustand ändert sich die wirksame Länge des Zylinders durch Ein- oder Ausfahren der Schubstange 20, so dass der Radlenker RL um die Lenkachse L verschwenkt wird. Die Kopplung der Schubstange 20 an den Radlenker RL im Bereich des Kraftübertragungsabschnitts RLK kann dabei über eine Gelenkverbindung und vorzugsweise über ein Universalgelenk erfolgen, so dass die Schubstange der Einfederungsbewegung folgen kann.

Wie bereits zuvor kurz erläutert, steht der Nehmerzylinder 2b mit einem Geberzylinder 2a über zwei Hydraulikleitungen 23a und 23b in Wirkverbindung. Diese Hydraulikleitungen 23a und 23b sind über Leitungsanschlüsse 22a und 22b entsprechend der Schnittdarstellung der Figur 11 mit zwei Kammern 24.1 und 24.2 des Nehmerzylinders 2b verbunden. Diese Kammern 24.1 und 24.2 definieren jeweils ein variables Volumen für Hydraulikflüssigkeit und sind durch einen mit der Schubstange 20 fest verbundenen Kolben 25 voneinander getrennt. Die Schubstange 20 des doppelt wirkenden Nehmerzylinders 2b kann somit durch Einspeisung von an dem Geberzylinder 2a verdrängter Hydraulikflüssigkeit in die eine oder andere Verstellrichtung translatorisch entlang einer Zylinderachse eines Zylindergehäuses 21 des Nehmerzylinders 2b verstellt werden.

Zwischen den beiden Kammern 24.1 und 24.2 ist ein Zwischenraum 24.3 ohne Hydraulikflüssigkeit vorgesehen, der zwischen einem mittleren Abschnitt des Kolbens 25 und der Zylinderwandung des Zylindergehäuses 21 ausgebildet ist. Über zwei axial zueinander beabstandete Dichtungen 3a und 3b ist dieser Zwischenraum 24.3 gegenüber den beiden Kammern 24.1 und 24.2 abgedichtet. Die beiden Dichtungen 3a und 3b sitzen jeweils in an dem Kolben 25 ausgebildeten Dichtungssitzen 251 oder 252. Um zu vermeiden, dass bei einer eingeleiteten Bewegung des Kolbens 25 und damit der Schubstange 20 zunächst die jeweilige Dichtung 3a oder 3b an eine zu der Bewegungsrichtung entgegengesetzte axiale Anschlagfläche des jeweiligen Dichtungssitzes 251 oder 252 gedrückt wird und durch einen sich erst aufbauenden Überdruck zwischen den Kammern 24.1 und 24.2 vorgespannt werden muss, ist in dem Kolben 25 ein Verbindungskanal 253 vorgesehen. Über diesen Verbindungskanal 253 ist der Zwischenraum 24.3 mit einem Referenzdruck, vorliegend vorzugsweise Umgebungsdruck, beaufschlagt. Der Verbindungskanal 253 ist hierbei beispielsweise durch eine Querbohrung an dem Kolben 25 und durch einen Kanal in einer hohlgebohrten und nach außen führenden Kolbenstange gebildet, so dass der Zwischenraum 24.3 und damit die einander zugewandten Rückseiten der beiden Dichtungen 3a und 3b mit Umgebungsdruck beaufschlagt werden, während die Vorderseiten der beiden Dichtungen 3a und 3b über die Hydraulikflüssigkeit mit dem Vordruck bzw. Systemdruck der hydraulischen Lenkeinrichtung beaufschlagt sind. Hierdurch liegen die beiden Dichtungen 3a und 3b immer definiert innerhalb ihrer Dichtungssitze 251 und 252 axial an den dem Zwischenraum 24.3 zugewandten Seiten an und sind dauerhaft vorgespannt. Ein reversibles Volumendefizit durch ein Anlegen der Dichtungen an ihre axialen Begrenzungsflächen in dem jeweiligen Dichtungssitz 251 oder 252 entfällt ebenso wie etwaige Leckageverluste, die durch zunächst unbelastete Dichtungen 3a und 3b entstehen könnten. Die hiermit bereitgestellte hydraulische Lenkeinrichtung 2 kann somit spielfrei und mit der nötigen Steifigkeit selbst kleinste Bewegungen des Lenkers LS an den Radlenker RL übertragen.

Zum Nachfüllen von Hydraulikflüssigkeit kann eine Nachfüllöffnung 27 an dem Zylindergehäuse 21 vorgesehen sein. Ferner kann zum Aufbringen einer manuellen Vorspannung ein axial verschiebliches Einstellelement 26 innerhalb des Zylindergehäuses 21 vorgesehen sein. Hierdurch lässt sich ein Volumen einer der Kammern 24.1, 24.2 gezielt verringern, um eine gewünschte (erhöhte) Vorspannung einzustellen, wenn z. B. die Vorspannung unter einen Schwellwert fällt und sich eventuell unerwünschtes Spiel oder eine Weichheit in der Lenkung einstellt.

Alternativ oder ergänzend kann hierfür eine Pumpeinrichtung vorgesehen sein, durch die beim Start des Motorrads M an mindestens einer Kolbenseite unter Druck Hydraulikflüssigkeit nachgefüllt wird, wenn über einen Drucksensor das Abfallen des Vordrucks unter einen vordefinierten Schwellwert festgestellt wird. Im Fahrbetrieb ist eine derartige Pumpeinrichtung bevorzugt außer Funktion, so dass das Ansprechverhalten der hydraulischen Lenkeinrichtung 2 nicht während der Fahrt verändert wird. Der hiermit zusammenwirkende Drucksensor kann aber weiterhin dafür genutzt werden, einen Fahrer des Motorrads M über einen eventuell abfallenden Vor- bzw. Systemdruck in der hydraulischen Lenkeinrichtung 2 akustisch und/oder visuell wahrnehmbar zu informieren.

Es ist selbstverständlich, dass der in der Figur 11 dargestellte Aufbau mit wenigstens zwei vorgespannten axialen Dichtungen 3a und 3b auch an dem Geberzylinder 2a vorgesehen werden kann. Bevorzugt werden sowohl der Geberzylinder 2a als auch der Nehmerzylinder 2b mit einer Dichtungsanordnung ausgeführt, wie sie exemplarisch in der Schnittdarstellung der Figur 11 dargestellt ist.

Bei dem dargestellten Ausführungsbeispiel eines Allrad-Motorrads M mit einer erfindungsgemäßen Vorderradbaugruppe wird das Vorderrad in einer geschobenen Schwinge SW (Achsschenkel) geführt, wobei über diese Schwinge SW eine Drehbewegung eines Antriebsmotors über ein umlaufendes Kraftübertragungselement, z. B. in Form eines Kettentriebes oder eines Riemens, von einem rahmenfesten Schwingendrehpunkt zu einer Antriebswelle AW an dem Vorderrad geführt wird. Über ein homokinetisches Wellengelenk 1 wird das an der Antriebswelle AW anliegende Drehmoment dann an die Nabe N des Vorderrades übertragen. Die Winkelstellung der Nabe N relativ zu der Antriebswelle AW für eine Kurvenfahrt ist vorliegend über eine hydraulische Lenkeinrichtung 2 veränderbar, die an einem Radlenker RL angreift, an dem die Nabe N drehbar gelagert ist und der über einen Gelenkkopf 11 drehbeweglich mit der Antriebswelle AW verbunden ist. Über die hydraulische Lenkeinrichtung 2 wird dabei eine steife und zuverlässige Übertragung einer Lenkbewegung an die Nabe N des Vorderrads erreicht, während über das homokinetische Wellengelenk 1 eine Drehmomentübertragung an die Nabe N ohne Drehgeschwindigkeits- und Drehmomentschwankungen ermöglicht ist.

### Bezugszeichenliste

- 1: Wellengelenk
- 10: Gelenkpfannenteil
- 11: Gelenkkopf
- 112a, 112b: Hebellager
- 115: Befestigungsabschnitt
- 12.1, 12.2: Hebelende
- 12a, 12b: 1. Gelenkhebel
- 13.1, 13.2: Hebelende
- 13a, 13b: 2. Gelenkhebel
- 142, 143: Lagerteil
- 14a, 14b: Gelenkzapfen (Gelenkelement)
- 15: Innerer Gelenkrahmen
- 150: Fixierungsbereich
- 151: Rahmensegment / Gabelarm
- 152: Verbindungsbereich
- 16: Äußerer Gelenkrahmen
- 160: Fixierungsbereich
- 161: Rahmensegment / Gabelarm
- 162: Verbindungsbereich
- 2: Lenkeinrichtung
- 2a: Geberzylinder
- 2b: Nehmerzylinder
- 20: Schubstange
- 200: Stangenende
- 21: Zylindergehäuse
- 22a, 22b: Leitungsanschluss
- 23a, 23b: Hydraulikleitung
- 24.1, 24.2: Kammer
- 24.3: Zwischenraum
- 25: Kolben
- 251, 252: Dichtungssitz
- 253: Verbindungskanal
- 26: Einstellelement
- 27: Nachfüllöffnung
- 3a, 3b: Dichtung
- 5: Lagerelement
- 6: Lagerelement
- AE: Antriebseinheit
- AK: Antriebskettenrad
- AW: Antriebswelle
- AWV: Wellenverbindungsabschnitt
- D1, D2, D3: Gelenkachse
- DL: Drehlager
- F: Federbein
- GE: Gleichlaufebene
- L: Lenkachse
- LA: Lagerachse
- LH: Hilfslenker
- LS: Lenker
- M: Motorrad
- N: Nabe
- NL: Hebellagerabschnitt
- NV: Verbindungsstelle
- R: Motorradrahmen
- RL: Radlenker (Lenkteil)
- RLA: Lagerabschnitt
- RLK: Kraftübertragungsabschnitt
- RLV: Verbindungsabschnitt
- SW: Schwinge
- α: Lenkwinkel

## Patentansprüche

1. Vorderradbaugruppe zum Antreiben eines Vorderrads eines Motorrads (M), mit
- einer anzutreibenden Nabe (N), an der das Vorderrad angeordnet wird,
- einer drehbaren Antriebswelle (AW) mit einem Antriebselement (AK), das zur Kopplung mit einem von einem Motor des Motorrades (M) angetriebenen Kraftübertragungselement ausgebildet und vorgesehen ist, um ein Drehmoment an die Antriebswelle (AW) zu übertragen,
- einem Wellengelenk (1) zur Übertragung eines Drehmoments von der Antriebswelle (AW) an die Nabe (N),
**dadurch gekennzeichnet, dass**
das Wellengelenk (1) zentral an der Nabe (N) angeordnet und als homokinetisches Wellengelenk ausgebildet ist, das die Antriebswelle (AW) und die Nabe (N) drehmomentübertragend und derart gelenkig miteinander verbindet, dass eine Winkelstellung der rotierenden Nabe (N) relativ zu der drehenden und die Nabe (N) antreibenden Antriebswelle (AW) über einen Lenker (LS) des Motorrads (M) veränderbar ist.

2. Vorderradbaugruppe nach Anspruch 1, **dadurch gekennzeichnet, dass** das Wellengelenk (1) zwei miteinander verbundene und relativ zueinander drehbar gelagerte Rahmenteile (15, 16) aufweist, wobei ein äußeres Rahmenteil (16) an der Nabe (N) drehbeweglich gelagert ist und ein inneres Rahmenteil (15) an einem mit der Antriebswelle (AW) drehfest verbundenen Teil (10) drehbeweglich gelagert ist.

3. Vorderradbaugruppe nach Anspruch 2, **dadurch gekennzeichnet, dass** das äußere Rahmenteil (16) an der Nabe (N) senkrecht zu einer Rotationsachse der Nabe (N) drehbeweglich gelagert ist und das innere Rahmenteil (15) an dem mit der Antriebswelle (AW) drehfest verbundenen Teil (10) senkrecht zu einer Drehachse der Antriebswelle (AW) drehbeweglich gelagert ist.

4. Vorderradbaugruppe nach Anspruch 2 oder 3, **dadurch gekennzeichnet, dass** das innere Rahmenteil (15) zwischen wenigstens zwei Rahmensegmenten (161) des äußeren Rahmenteils (16) angeordnet und hieran zusätzlich drehbeweglich gelagert ist.

5. Vorderradbaugruppe nach einem der vorhergehenden Ansprüche, **dadurch gekennzeichnet, dass** das Wellengelenk (1) wenigstens einen ersten und einen zweiten Gelenkhebel (12a, 13a) aufweist, wobei der wenigstens eine erste Gelenkhebel (12a) und der wenigstens eine zweite Gelenkhebel (13a) jeweils mit einem ersten Hebelende (12.1; 13.1) an einem verschieblich gelagerten Gelenkelement (14a, 14b) angelenkt sind und wobei
- der wenigstens eine erste Gelenkhebel (12a) mit seinem anderen, zweiten Hebelende (12.2) an einem mit der Antriebswelle (AW) drehfest verbundenen Teil (10) angelenkt ist und
- der wenigstens eine zweite Gelenkhebel (13a) mit seinem anderen, zweiten Hebelende (13.2) an der Nabe (N) angelenkt ist.

6. Vorderradbaugruppe nach 5, **dadurch gekennzeichnet, dass** bei einer gleichbleibenden Winkelstellung der Nabe (N) das verschieblich gelagerte Gelenkelement (14a, 14b) bei der Übertragung eines Drehmoments von der Antriebswelle (AW) auf die Nabe (N) in einer Gleichlaufebene (GE) um eine Drehachse rotiert, die in einem von der Winkelstellung der Nabe (N) abhängigen, gleichbleibenden Winkel zu der Drehachse der Antriebswelle (AW) verläuft.

7. Vorderradbaugruppe nach einem der vorhergehenden Ansprüche, **dadurch gekennzeichnet, dass** die Antriebswelle (AW) drehfest mit einem Gelenkpfannenteil (10) verbunden ist und in einer Gelenkpfanne des Gelenkpfannenteils (10) ein Gelenkkopf (11) eines Radlenkers (RL) winkelbeweglich gelagert ist, an dem die Nabe (N) drehbar gelagert ist.

8. Vorderradbaugruppe nach einem der vorhergehenden Ansprüche, **dadurch gekennzeichnet, dass** die Antriebswelle (AW) an einer an einem Rahmen (R) des Motorrads (M) zu befestigenden Schwinge (SW) drehbar gelagert ist und zur Veränderung der Winkelstellung der Nabe (N) ein Radlenker (RL) vorgesehen ist, an dem die Nabe (N) drehbar gelagert ist und der an einem ebenfalls an dem Rahmen (R) zu befestigenden Hilfslenker (LH) angelenkt ist, so dass eine Winkelstellung der Nabe (N) relativ zu der Antriebswelle (AW) durch ein Schwenken des Radlenkers (RL) um eine Lenkachse (L) veränderbar ist.

9. Vorderradbaugruppe nach Anspruch 8, **dadurch gekennzeichnet, dass** die Lenkachse (L) durch den Anlenkpunkt des Radlenkers (RL) an dem Hilfslenker (LH) und das Wellengelenk (1) definiert ist, über das der Radlenker (RL) relativ zu der Antriebswelle (AW) verschwenkt werden kann.

10. Vorderradbaugruppe nach Anspruch 8 oder 9, **dadurch gekennzeichnet, dass** die Schwinge (SW) über wenigstens ein erstes Gelenk und der Hilfslenker (LH) über wenigstens ein zweites Gelenk an dem Rahmen (R) angelenkt sind und der Radlenker (RL) über ein drittes Gelenk an dem Hilfslenker (LH) angelenkt ist und das Wellengelenk (1) ein viertes Gelenk definiert, über das der Radlenker (RL) relativ zu der Antriebswelle (AW) verschwenkt werden kann und die Nabe (N) gelenkig mit der Antriebswelle (AW) gekoppelt ist.

11. Vorderradbaugruppe nach einem der Ansprüche 1 bis 10, **dadurch gekennzeichnet, dass** mittels der Vorderradbaugruppe eine Lenkbewegung von dem Lenker (LS) des Motorrads (M) an das Vorderrad übertragbar ist, wobei eine hydraulische Lenkeinrichtung (2) mit einer translatorisch verstellbaren Schubstange (20) vorgesehen ist, mittels der eine Lenkbewegung an ein mit dem Vorderrad gekoppeltes, schwenkbar gelagertes Lenkteil (RL) übertragbar, wobei die Schubstange (20) Teil eines doppeltwirkenden Nehmerzylinders (2b) der hydraulischen Lenkeinrichtung (2) mit einem verschieblichen Kolben (25) ist und
- der Kolben (25) zwei Kammern (24.1, 24.2) für Hydraulikflüssigkeit voneinander trennt,
- an dem Kolben (25) wenigstens zwei axial zueinander beabstandete Dichtungen (3a, 3b) zur Abdichtung der zwei Kammern (24.1, 24.2) gegenüber einem dazwischen liegenden Zwischenraum (24.3) vorgesehen sind und
- in dem Kolben (25) wenigstens ein Verbindungkanal (253) ausgebildet ist, über den der Zwischenraum (24.3) mit einem Referenzdruck beaufschlagt ist, der an den wenigstens zwei Dichtungen (3a, 3b) anliegt.

12. Vorderradbaugruppe nach Anspruch 11, **dadurch gekennzeichnet, dass**
- das Lenkteil einen Radlenker (RL) umfasst, an dem das Vorderrad drehbar gelagert ist,
- ein Hilfslenker (LH) vorgesehen ist, der an einem Rahmen (R) des Motorrads (M) zu befestigen ist und an dem der Radlenker (RL) angelenkt ist, so dass der Radlenker (RL) um eine Lenkachse (L) schwenkbar ist, und
- eine Schwinge (SW) vorgesehen ist, die das Vorderrad führt und die ebenfalls an dem Rahmen (R) des Motorrads (M) zu befestigen ist,
wobei der Radlenker (RL) mit der translatorisch verstellbaren Schubstange (20) gekoppelt ist, mittels der der Radlenker (RL) um die Lenkachse (L) geschwenkt werden kann.

13. Vorderradbaugruppe nach Anspruch 11 oder 12, **dadurch gekennzeichnet, dass** die Schubstange (20) Teil eines Nehmerzylinders (2b) der hydraulischen Lenkeinrichtung (2) ist und der Nehmerzylinder (2b) mit einem Geberzylinder (2a) der hydraulischen Lenkeinrichtung (2) gekoppelt ist, der mit einem Lenker (LS) des Motorrads (M) zu verbinden ist.

14. Vorderradbaugruppe nach einem der Ansprüche 11 bis 13, **dadurch gekennzeichnet, dass** ein mechanisches Einstellelement (26) vorgesehen ist, mittels dem ein Volumen für eine Hydraulikflüssigkeit der hydraulischen Lenkeinrichtung (2) reduzierbar ist, um einen statischen Vordruck einzustellen, und/oder eine Pumpeinrichtung vorgesehen, mittels der beim Starten des Motorrads (M) automatisch ein vordefinierter statischer Vordruck in der hydraulischen Lenkeinrichtung (2) erzeugbar ist.

15. Motorrad, insbesondere mit Allradantrieb, mit einer Vorderradbaugruppe nach einem der vorhergehenden Ansprüche 1 bis 14.

## Claims

1. Front wheel assembly for driving a front wheel of a motorcycle (M), having
- a hub (N) to be driven, on which the front wheel is arranged,
- a rotatable drive shaft (AW) with a drive element (AK) which is configured for coupling to a power transmission element driven by an engine of the motorcycle (M) and is provided to transmit a torque to the drive shaft (AW),
- a cardan joint (1) for transmitting a torque from the drive shaft (AW) to the hub (N),
**characterized in that**
the cardan joint (1) is arranged centrally on the hub (N) and is configured as a homokinetic cardan joint which connects the drive shaft (AW) and the hub (N) in a manner which transmits torque and is articulated in such a way that an angular position of the rotating hub (N) relative to the rotating drive shaft (AW) which drives the hub (N) can be changed via a handlebar (LS) of the motorcycle (M) .

2. Front wheel assembly according to Claim 1, **characterized in that** the cardan joint (1) has two frame parts (15, 16) which are connected to one another and are mounted such that they can be rotated relative to one another, an outer frame part (16) being mounted in a rotationally movable manner on the hub (N), and an inner frame part (15) being mounted in a rotationally movable manner on a part (10) which is connected fixedly to the drive shaft (AW) so as to rotate with it.

3. Front wheel assembly according to Claim 2, **characterized in that** the outer frame part (16) is mounted on the hub (N) such that it can be moved rotationally perpendicularly with respect to a rotational axis of the hub (N), and the inner frame part (15) is mounted, such that it can be moved rotationally perpendicularly with respect to a rotational axis of the drive shaft (AW), on the part (10) which is connected fixedly to the drive shaft (AW) so as to rotate with it.

4. Front wheel assembly according to Claim 2 or 3, **characterized in that** the inner frame part (15) is arranged between at least two frame segments (161) of the outer frame part (16) and is additionally mounted in a rotationally movable manner thereon.

5. Front wheel assembly according to one of the preceding claims, **characterized in that** the cardan joint (1) has at least one first and one second articulated lever (12a, 13a), the at least one first articulated lever (12a) and the at least one second articulated lever (13a) being articulated in each case by way of a first lever end (12.1; 13.1) on a displaceably mounted joint element (14a, 14b), and
- the at least one first articulated lever (12a) being articulated by way of its other, second lever end (12.2) on a part (10) which is connected fixedly to the drive shaft (AW) so as to rotate with it, and
- the at least one second articulated lever (13a) being articulated by way of its other, second lever end (13.2) on the hub (N).

6. Front wheel assembly according to Claim 5, **characterized in that,** in the case of a constant angular position of the hub (N), the displaceably mounted articulated element (14a, 14b) rotates, during the transmission of a torque from the drive shaft (AW) to the hub (N) in a constant velocity plane (GE), about a rotational axis which runs at a constant angle with respect to the rotational axis of the drive shaft (AW), which constant angle is dependent on the angular position of the hub (N).

7. Front wheel assembly according to one of the preceding claims, **characterized in that** the drive shaft (AW) is connected fixedly to a joint socket part (10) so as to rotate with it, and an articulation head (11) of a wheel link (RL) is mounted in a joint socket of the joint socket part (10) in a manner which allows angular motion, on which articulation head (11) the hub (N) is mounted rotatably.

8. Front wheel assembly according to one of the preceding claims, **characterized in that** the drive shaft (AW) is mounted rotatably on a swing arm (SW) to be fastened to a frame (R) of the motorcycle (M), and a wheel link (RL) is provided for changing the angular position of the hub (N), on which wheel link (RL) the hub (N) is mounted rotatably and which wheel link (RL) is articulated on an auxiliary link (LH) which is likewise to be fastened to the frame (R), with the result that an angular position of the hub (N) relative to the drive shaft (AW) can be changed by way of pivoting of the wheel link (RL) about a steering axis (L).

9. Front wheel assembly according to Claim 8, **characterized in that** the steering axis (L) is defined by way of the articulation point of the wheel link (RL) on the auxiliary link (LH) and by way of the cardan joint (1), via which the wheel link (RL) can be pivoted relative to the drive shaft (AW).

10. Front wheel assembly according to Claim 8 or 9, **characterized in that** the swing arm (SW) is articulated via at least one first joint on the frame (R) and the auxiliary link (LH) is articulated via at least one second joint on the frame (R), and the wheel link (RL) is articulated via a third joint on the auxiliary link (LH), and the cardan joint (1) defines a fourth joint, via which the wheel link (RL) can be pivoted relative to the drive shaft (AW), and the hub (N) is coupled in an articulated manner to the drive shaft (AW).

11. Front wheel assembly according to one of Claims 1 to 10, **characterized in that** a steering movement can be transmitted from the handlebar (LS) of the motorcycle (M) to the front wheel by means of the front wheel assembly, a hydraulic steering device (2) with a translationally adjustable push rod (20) being provided, by means of which a steering movement can be transmitted to a pivotably mounted steering part (RL) which is coupled to the front wheel, the push rod (20) being part of a double-acting slave cylinder (2b) of the hydraulic steering device (2) with a displaceable piston (25), and
- the piston (25) separating two chambers (24.1, 24.2) for hydraulic liquid from one another,
- at least two seals (3a, 3b) which are spaced apart axially from one another being provided on the piston (25) for sealing the two chambers (24.1, 24.2) with respect to an intermediate space (24.3) which lies in between, and
- at least one connecting duct (253) being configured in the piston (25), via which connecting duct (253) the intermediate space (24.3) is loaded with a reference pressure which prevails at the at least two seals (3a, 3b).

12. Front wheel assembly according to Claim 11, **characterized in that**
- the steering part comprises a wheel link (RL), on which the front wheel is mounted rotatably,
- an auxiliary link (LH) is provided which is to be fastened to a frame (R) of the motorcycle (M) and on which the wheel link (RL) is articulated, with the result that the wheel link (RL) can be pivoted about a steering axis (L), and
- a swing arm (SW) is provided which controls the front wheel and which is likewise to be fastened to the frame (R) of the motorcycle (M),
the wheel link (RL) being coupled to the translationally adjustable push rod (20), by means of which the wheel link (RL) can be pivoted about the steering axis (L).

13. Front wheel assembly according to Claim 11 or 12, **characterized in that** the push rod (20) is part of a slave cylinder (2b) of the hydraulic steering device (2), and the slave cylinder (2b) is coupled to a master cylinder (2a) of the hydraulic steering device (2), which master cylinder (2a) is to be connected to a handlebar (LS) of the motorcycle (M).

14. Front wheel assembly according to one of Claims 11 to 13, **characterized in that** a mechanical setting element (26) is provided, by means of which a volume for a hydraulic liquid of the hydraulic steering system (2) can be reduced, in order to set a static system pressure and/or a pump device is provided, by means of which a predefined static system pressure can be generated automatically in the hydraulic steering device (2) during the starting of the motorcycle (M).

15. Motorcycle, in particular having all wheel drive, having a front wheel assembly according to one of the preceding Claims 1 to 14.

## Revendications

1. Module de roue avant pour l'entraînement d'une roue avant d'une moto (M), comprenant
- un moyeu à entraîner (N) sur lequel est disposée la roue avant,
- un arbre d'entraînement rotatif (AW) avec un élément d'entraînement (AK) qui est réalisé pour être accouplé à un élément de transfert de force entraîné par un moteur de la moto (M) et qui est prévu pour transférer un couple à l'arbre d'entraînement (AW),
- un joint d'arbre (1) pour transférer un couple de l'arbre d'entraînement (AW) au moyeu (N),
**caractérisé en ce que**
le joint d'arbre (1) est disposé centralement sur le moyeu (N) et est réalisé sous forme de joint d'arbre homocinétique qui relie de manière articulée l'un à l'autre l'arbre d'entraînement (AW) et le moyeu (N) avec transfert de couple de telle sorte qu'une position angulaire du moyeu rotatif (N) par rapport à l'arbre d'entraînement (AW) en rotation et entraînant le moyeu (N) puisse être modifiée par le biais d'un guidon (LS) de la moto (M).

2. Module de roue avant selon la revendication 1, **caractérisé en ce que** le joint d'arbre (1) présente deux parties de cadre (15, 16) connectées l'une à l'autre et supportées de manière rotative l'une par rapport à l'autre, une partie de cadre extérieure (16) étant supportée de manière déplaçable en rotation sur le moyeu (N) et une partie de cadre intérieure (15) étant supportée de manière déplaçable en rotation sur une partie (10) connectée de manière solidaire en rotation à l'arbre d'entraînement (AW).

3. Module de roue avant selon la revendication 2, **caractérisé en ce que** la partie de cadre extérieure (16) est supportée sur le moyeu (N) de manière déplaçable en rotation perpendiculairement à un axe de rotation du moyeu (N) et la partie de cadre intérieure (15) est supportée sur la partie (10) connectée de manière solidaire en rotation à l'arbre d'entraînement (AW) de manière déplaçable en rotation perpendiculairement à un axe de rotation de l'arbre d'entraînement (AW).

4. Module de roue avant selon la revendication 2 ou 3, **caractérisé en ce que** la partie de cadre intérieure (15) est disposée entre au moins deux segments de cadre (161) de la partie de cadre extérieure (16) et est supportée en outre de manière déplaçable en rotation sur ceux-ci.

5. Module de roue avant selon l'une quelconque des revendications précédentes, **caractérisé en ce que** le joint d'arbre (1) présente au moins un premier et un deuxième levier articulé (12a, 13a), l'au moins un premier levier articulé (12a) et l'au moins un deuxième levier articulé (13a) étant chacun articulés avec une première extrémité de levier (12.1 ; 13.1) à un élément de joint (14a, 14b) supporté de manière déplaçable et
- l'au moins un premier levier articulé (12a) étant articulé par son autre extrémité, c'est-à-dire sa deuxième extrémité de levier (12.2) à une partie (10) connectée de manière solidaire en rotation à l'arbre d'entraînement (AW) et
- l'au moins un deuxième levier articulé (13a) étant articulé avec son autre extrémité, c'est-à-dire sa deuxième extrémité de levier (13.2) au moyeu (N).

6. Module de roue avant selon la revendication 5, **caractérisé en ce que** dans le cas d'une position angulaire constante du moyeu (N), l'élément de joint (14a, 14b) supporté de manière déplaçable lors du transfert d'un couple de l'arbre d'entraînement (AW) au moyeu (N) dans un plan homocinétique (GE) tourne autour d'un axe de rotation qui s'étend suivant un angle constant dépendant de la position angulaire du moyeu (N) par rapport à l'axe de rotation de l'arbre d'entraînement (AW).

7. Module de roue avant selon l'une quelconque des revendications précédentes, **caractérisé en ce que** l'arbre d'entraînement (AW) est connecté de manière solidaire en rotation à une partie de cavité d'articulation (10) et une tête d'articulation (11) d'un bras de roue (RL) est supportée de manière déplaçable angulairement dans une cavité d'articulation de la partie de cavité d'articulation (10), au niveau duquel le moyeu (N) est supporté de manière rotative.

8. Module de roue avant selon l'une quelconque des revendications précédentes, **caractérisé en ce que** l'arbre d'entraînement (AW) est supporté de manière rotative sur un bras oscillant (SW) devant être fixé sur un cadre (R) de la moto (M) et un bras de roue (RL) est prévu pour modifier la position angulaire du moyeu (N), sur lequel le moyeu (N) est supporté de manière rotative et qui est articulé à un bras oscillant auxiliaire (LH) devant également être fixé au cadre (R), de telle sorte qu'une position angulaire du moyeu (N) par rapport à l'arbre d'entraînement (AW) puisse être modifiée par un pivotement du bras de roue (RL) autour d'un axe de direction (L).

9. Module de roue avant selon la revendication 8, **caractérisé en ce que** l'axe de direction (L) est défini par le point d'articulation du bras de roue (RL) au bras auxiliaire (LH) et par le joint d'arbre (1), par le biais duquel le bras de roue (RL) peut pivoter par rapport à l'arbre d'entraînement (AW).

10. Module de roue avant selon la revendication 8 ou 9, **caractérisé en ce que** le bras oscillant (SW) est articulé au cadre (R) par le biais d'au moins une première articulation et le bras auxiliaire (LH) est articulé au cadre (R) par le biais d'au moins une deuxième articulation et le bras de roue (RL) est articulé au bras auxiliaire (LH) par le biais d'une troisième articulation et le joint d'arbre (1) définit une quatrième articulation par le biais de laquelle le bras de roue (RL) peut pivoter par rapport à l'arbre d'entraînement (AW) et le moyeu (N) est accouplé de manière articulée à l'arbre d'entraînement (AW).

11. Module de roue avant selon l'une quelconque des revendications 1 à 10, **caractérisé en ce qu'**au moyen du module de roue avant, un mouvement de direction peut être transmis depuis le guidon (LS) de la moto (M) à la roue avant, un dispositif de direction hydraulique (2) étant pourvu d'une tige de poussée (20) déplaçable en translation au moyen de laquelle un mouvement de direction peut être transmis à une partie de direction (RL) supportée de manière pivotante, accouplée à la roue avant, la tige de poussée (20) faisant partie d'un cylindre récepteur à double effet (2b) du dispositif de direction hydraulique (2) avec un piston déplaçable (25) et
- le piston (25) séparant l'une de l'autre deux chambres (24.1, 24.2) pour du liquide hydraulique,
- au moins deux joints d'étanchéité (3a, 3b) espacés axialement l'un de l'autre étant prévus sur le piston (25) pour réaliser l'étanchéité des deux chambres (24.1, 24.2) par rapport à un espace intermédiaire (24.3) situé entre elles, et
- au moins un canal de liaison (253) étant réalisé dans le piston (25), par le biais duquel l'espace intermédiaire (24.3) est sollicité avec une pression de référence qui s'applique au niveau des au moins deux joints d'étanchéité (3a, 3b).

12. Module de roue avant selon la revendication 11, **caractérisé en ce que**
- la partie de direction comprend un guidon (RL) sur lequel la roue avant est supportée de manière rotative,
- un bras auxiliaire (LH) est prévu, lequel doit être fixé à un cadre (R) de la moto (M) et auquel est articulé le guidon (RL) de telle sorte que le guidon (RL) puisse pivoter autour d'un axe de direction (L), et
- un bras oscillant (SW) est prévu, lequel guide la roue avant et doit également être fixé au niveau du cadre (R) de la moto (M),
le guidon (RL) étant accouplé à la tige de poussée (20) déplaçable en translation, au moyen de laquelle le guidon (RL) peut pivoter autour de l'axe de direction (L).

13. Module de roue avant selon la revendication 11 ou 12, **caractérisé en ce que** la tige de poussée (20) fait partie d'un cylindre récepteur (2b) du dispositif de direction hydraulique (2) et le cylindre récepteur (2b) est accouplé à un maître-cylindre (2a) du dispositif de direction hydraulique (2), qui doit être raccordé à un guidon (LS) de la moto (M).

14. Module de roue avant selon l'une quelconque des revendications 11 à 13, **caractérisé en ce qu'**un élément d'ajustement mécanique (26) est prévu, au moyen duquel un volume pour un liquide hydraulique du dispositif de direction hydraulique (2) peut être réduit afin d'ajuster une pression préliminaire statique et/ou un dispositif de pompe est prévu, au moyen duquel, lors du démarrage de la moto (M) une pression préliminaire statique prédéfinie peut automatiquement être générée dans le dispositif de direction hydraulique (2).

15. Moto, en particulier avec entraînement toutes roues motrices, comprenant un module de roue avant selon l'une quelconque des revendications précédentes 1 à 14.
